# EUROPEAN PATENT APPLICATION

(11) **EP 4 852 361 A1**
(43) Date of publication of application: **09.12.2026**
(21) Application number: 25747702.6
(22) Date of filing: 22.01.2025
(51) Int. Cl.: H04L 5/00, H04W 52/04

(54) **METHOD FOR DETERMINING POWER CONTROL ADJUSTMENT STATE, DEVICE, APPARATUS AND STORAGE MEDIUM**

(30) Priority: 30.01.2024 CN 202410132563
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN); SONG, Lei, Beijing 100085 (CN); LUO, Yajuan, Beijing 100085 (CN)
(74) Representative: Studio Torta S.p.A.
(86) International application number: PCT/CN2025/074025
(87) International publication number: WO 2025/162131

(57) **Abstract**

The present disclosure provides a method for determining a power control adjustment state, a device, an apparatus and a storage medium, where the method includes: a terminal determines, based on first information, the power control adjustment state corresponding to a sounding reference signal (SRS) transmission, where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

## Description

### CROSS-REFERENCE TO RELATED APPLICATIONS

This application claims priority to Chinese Patent Application No. 202410132563.X, filed on January 30, 2024, and entitled "Method for Determining Power Control Adjustment State, Device, Apparatus and Storage Medium", which is hereby incorporated by reference in its entirety.

### TECHNICAL FIELD

The present disclosure relates to the field of wireless communication technologies, and in particular, to a method for determining a power control adjustment state, a device, an apparatus and a storage medium.

### BACKGROUND

Manners for determining a power control adjustment state (power control adjustment state) of a sounding reference signal (Sounding Reference Signal, SRS) include: 1) when the SRS is configured to adopt a power control adjustment state which is the same as a physical uplink shared channel (Physical Uplink Shared Channel, PUSCH) (i.e., an SRS transmission follows (follow) the PUSCH power control adjustment state), the SRS power control adjustment state is a current PUSCH power control adjustment state; and 2) when the SRS is not configured to adopt the power control adjustment state which is the same as the PUSCH (i.e., the SRS transmission is not configured to follow (follow) the PUSCH power control adjustment state), a power control adjustment state index of the SRS is ignored, i.e., the SRS transmission only supports one power control adjustment state.

However, in some scenarios, the above determination manners make it difficult to determine the SRS power control adjustment state, or the determined power control adjustment state is not reasonable. Therefore, a new solution for determining the SRS power control adjustment state needs to be proposed.

### SUMMARY

In view of the problems existing in the related art, the present disclosure provides a method for determining a power control adjustment state, a device, an apparatus and a storage medium.

In a first aspect, the present disclosure provides a method for determining a power control adjustment state, applied to a terminal, including:
determining, based on first information, a power control adjustment state corresponding to a sounding reference signal (SRS) transmission;
where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the determining, based on the first information, the power control adjustment state corresponding to the SRS transmission includes:
determining a power control adjustment state index corresponding to the first information;
determining, based on the power control adjustment state index corresponding to the first information, the power control adjustment state corresponding to the SRS transmission.

In some embodiments, in a case that the first information includes the first PUSCH, the determining, based on the first information, the power control adjustment state corresponding to the SRS transmission includes:
determining, based on a first PUSCH power control adjustment state, the power control adjustment state corresponding to the SRS transmission.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the determining the power control adjustment state index corresponding to the first information includes:
determining the power control adjustment state index corresponding to the first information based on one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI; or,
a protocol predefined rule.

In some embodiments, the power control adjustment state index corresponding to the first information is: an SRS power control adjustment state index or a PUSCH power control adjustment state index.
In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the method further includes:
receiving first configuration information sent by a network device, where the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

In a second aspect, the present disclosure further provides a method for determining a power control adjustment state, applied to a network device, including:
sending second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the power control adjustment state corresponding to the SRS transmission is determined based on the power control adjustment state index corresponding to the first information.

In some embodiments, in a case that the first information includes the first PUSCH, the power control adjustment state corresponding to the SRS transmission is determined based on the first PUSCH power control adjustment state.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the second information includes one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the second information includes first configuration information, and the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

In a third aspect, the present disclosure further provides a terminal, including a memory, a transceiver, and a processor;
where the memory is configured to store computer programs; the transceiver is configured to receive and send data under a control of the processor; and the processor is configured to read the computer programs in the memory and perform the following operations:
determining, based on first information, a power control adjustment state corresponding to a sounding reference signal (SRS) transmission;
where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the determining, based on the first information, the power control adjustment state corresponding to the SRS transmission includes:
determining a power control adjustment state index corresponding to the first information;
determining, based on the power control adjustment state index corresponding to the first information, the power control adjustment state corresponding to the SRS transmission.

In some embodiments, in a case that the first information includes the first PUSCH, the determining, based on the first information, the power control adjustment state corresponding to the SRS transmission includes:
determining, based on a first PUSCH power control adjustment state, the power control adjustment state corresponding to the SRS transmission.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the determining the power control adjustment state index corresponding to the first information includes:
determining the power control adjustment state index corresponding to the first information based on one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI; or,
a protocol predefined rule.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the operation further includes:
receiving first configuration information sent by a network device, where the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

In a fourth aspect, the present disclosure further provides a network device, including a memory, a transceiver, and a processor;
where the memory is configured to store computer programs; the transceiver is configured to receive and send data under a control of the processor; and the processor is configured to read the computer programs in the memory and perform the following operations:
sending second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the power control adjustment state corresponding to the SRS transmission is determined based on the power control adjustment state index corresponding to the first information.

In some embodiments, in a case that the first information includes the first PUSCH, the power control adjustment state corresponding to the SRS transmission is determined based on the first PUSCH power control adjustment state.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the second information includes one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the second information includes first configuration information, and the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

In a fifth aspect, the present disclosure further provides an apparatus for determining a power control adjustment state, including:
a determining unit, configured to determine, based on first information, a power control adjustment state corresponding to a sounding reference signal (SRS) transmission;
where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In a sixth aspect, the present disclosure further provides an apparatus for determining a power control adjustment state, including:
a sending unit, configured to send second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In a seventh aspect, the present disclosure further provides a non-transitory readable storage medium having computer programs therein, where the computer programs are used to cause a processor to execute the method for determining the power control adjustment state according to the first aspect as described above, or execute the method for determining the power control adjustment state according to the second aspect as described above.

In an eighth aspect, the present disclosure further provides a communication device having computer programs therein, where the computer programs are used to cause the communication device to execute the method for determining the power control adjustment state according to the first aspect as described above, or execute the method for determining the power control adjustment state according to the second aspect as described above.

In a ninth aspect, the present disclosure further provides a processor-readable storage medium having computer programs therein, where the computer programs are used to cause a processor to execute the method for determining the power control adjustment state according to the first aspect as described above, or execute the method for determining the power control adjustment state according to the second aspect as described above.

In a tenth aspect, the present disclosure further provides a chip product having computer programs therein, where the computer programs are used to cause the chip product to execute the method for determining the power control adjustment state according to the first aspect as described above, or execute the method for determining the power control adjustment state according to the second aspect as described above.

According to a method for determining a power control adjustment state, a device, an apparatus and a storage medium provided by the present disclosure, a terminal may determine the power control adjustment state corresponding to an SRS transmission based on one or more of related information of a first SRS resource, related information of a first SRS resource set, a first TCI state, first spatial relation information, a first control resource pool index, a first SRI, or a first PUSCH, and then determine a transmission power of the SRS transmission, thereby solving the problem in some scenarios that the terminal cannot determine the power control adjustment state corresponding to the SRS transmission, or the determined power control adjustment state is unreasonable, and being able to adapt to needs of determining the power control adjustment state corresponding to the SRS transmission in various scenarios, improving flexibility of determining the power control adjustment state corresponding to the SRS transmission.

### BRIEF DESCRIPTION OF DRAWINGS

In order to explain the embodiments of the present disclosure or the technical solutions in the related art more clearly, the drawings needed to be used in the embodiments or the description of the related art will be introduced briefly in the following. Obviously, the drawings in the following description are some embodiments of the present disclosure. For those ordinary skill in the art, other drawings can be obtained from these drawings without paying creative effort.
FIG. 1 is a first schematic flowchart of a method for determining a power control adjustment state provided by an embodiment of the present disclosure.
FIG. 2 is an exemplary diagram of SRS transmission and PUSCH transmission provided by an embodiment of the present disclosure.
FIG. 3 is a second schematic flowchart of a method for determining a power control adjustment state provided by an embodiment of the present disclosure.
FIG. 4 is a schematic structural diagram of a terminal provided by an embodiment of the present disclosure.
FIG. 5 is a schematic structural diagram of a network device provided by an embodiment of the present disclosure.
FIG. 6 is a first schematic structural diagrams of an apparatus for determining a power control adjustment state provided by an embodiment of the present disclosure.
FIG. 7 is a second schematic structural diagram of tan apparatus for determining a power control adjustment state provided by an embodiment of the present disclosure.

### DESCRIPTION OF EMBODIMENTS

In the embodiments of the present disclosure, the term "and/or" describes an association relationship of associated objects, which represents that there may be three relationships. For example, A and/or B may represent three situations: A exists alone, A and B exist at the same time, and B exists alone. The character "/" generally represents that the associated objects before and after the character are in an "or" relationship.

The term "plurality" in the embodiments of the present disclosure refers to two or more than two, and other quantifiers are similar thereto.

The terms "first" and "second" in the embodiments of the present disclosure are only used for distinction of similar objects, and are not used for describing a special order or sequence. It should be understood that the terms used in this way are interchangeable under appropriate circumstances, so that the embodiments of the present disclosure can be implemented in an order other than those illustrated or described herein. Moreover, the objects distinguished by "first", "second" are generally of the same type, and the number of objects is not limited. For example, a first object may be one or multiple.

The technical solutions in the embodiments of the present disclosure are clearly and completely described in the following with reference to the drawings of the embodiments of the present disclosure. Obviously, the described embodiments are part of embodiments of the present disclosure, rather than all the embodiments. Based on the embodiments of the present disclosure, all other embodiments obtained by those of ordinary skill in the art without creative effort are all within the protection scope of the present disclosure.

In order to facilitate a clearer understanding of the technical solutions of the various embodiments of the present disclosure, some technical contents related to the various embodiments of the present disclosure are first introduced.

In wireless communication systems (such as a long term evolution (Long Term Evolution, LTE) system, a new radio (New Radio, NR) system, etc.), a general calculation formula for uplink transmission power is: $P = min \left\{{P}_{CMAX},\left\{open-loop operating point\right\}+\left\{closed-loop offset\right\}+\left\{other adjustments\right\}\right.$

In the NR system and the LTE system, a specific manner is: $P = min \left\{{P}_{CMAX},\left\{{P}_{0}\left(j\right)+α\left(k\right)PL\left(q\right)\right\}+\left\{f\left(l\right)\right\}+\left\{10 {log}_{10}M+Δ\right\}\right\}$

That is, the open-loop operating point is determined by *P*₀(*j*) + *α*(*k*)*PL*(*q*), the closed-loop offset is determined by *f*(*l*), and other adjustments are determined by 10 log₁₀ *M + Δ.*

*P*₀(*j*) is a power target value of an open-loop receiving end, and *j* is an index used to select one from a set of *P*₀. Optionally, when there is only one value for *j,* (*j*) is omitted.

*PL*(*q*) is a path loss (abbreviated as PL) estimate, *q* is an index used to select one from a set of path loss estimates maintained by a terminal, or used to represent an index of a reference signal for determining the path loss *PL*(*q*). Optionally, when there is only one *q* value, (*q*) is omitted.

*α*(*k*) is a partial path loss compensation factor, ranging from 0 to 1, *k* is an index used to select one from multiple index values. Optionally, when there is only one *k* value, (*k*) is omitted.

A closed-loop part *f*(*l*) is a value of a power control offset (adjustment) state (power control adjustment state) with an index *l*.

Other adjustments are mainly adjustments related to resource allocation, link adaptation, etc. M is an adjustment related to a bandwidth allocated for this uplink transmission, and Δ is an adjustment related to a modulation and coding scheme (MCS) of this uplink transmission.

*P*_{CMAX} is a configured transmission power, which is a maximum allowable transmission power.

For an SRS transmission, manners for determining the power control adjustment state in the calculation formula of a transmission power of the SRS transmission include: 1) when the SRS is configured to adopt a power control adjustment state which is the same as a PUSCH (i.e., the SRS transmission follows (follow) the PUSCH power control adjustment state), the SRS power control adjustment state is a current PUSCH power control adjustment state; 2) when the SRS is not configured to adopt the power control adjustment state which is the same as the PUSCH (i.e., the SRS transmission is not configured to follow (follow) the PUSCH power control adjustment state), a power control adjustment state index of the SRS is ignored, i.e., the SRS transmission only supports one power control adjustment state.

However, in some scenarios, the above determination manners make it difficult to determine the SRS power control adjustment state, or the determined power control adjustment state is not reasonable. Therefore, a new solution for determining the SRS power control adjustment state needs to be proposed. For example, in a multiple-transmit and/or reception point (Multiple-transmit and/or reception point, M-TRP) system, if the terminal is allowed to use power control adjustment states corresponding to each TRP for SRS transmissions oriented to each TRP respectively, it helps to improve performance of SRS transmission. However, in the related art, if the SRS transmission is not configured to follow the PUSCH power control adjustment state, the SRS transmissions oriented to any TRP correspond to a same SRS power control adjustment state. If the SRS transmission is configured to follow the PUSCH power control adjustment state, there is no clear regulation in the related art on how the network device and the terminal determine the SRS power control adjustment state, which makes it impossible for the network device to effectively adjust a power control corresponding to the SRS transmission. For another example, when the terminal may use multiple antenna panels for transmission, if the terminal is allowed to use the power control adjustment states corresponding to each antenna panel for SRS transmitted using different antenna panels respectively, it helps to improve the performance of SRS transmission, but the related art does not support this. The terminal can only use the same SRS power control adjustment state to transmit different SRSs. This makes it impossible for the network device to more effectively adjust the power control corresponding to the SRS transmission, thus affecting transmission performance of the SRS.

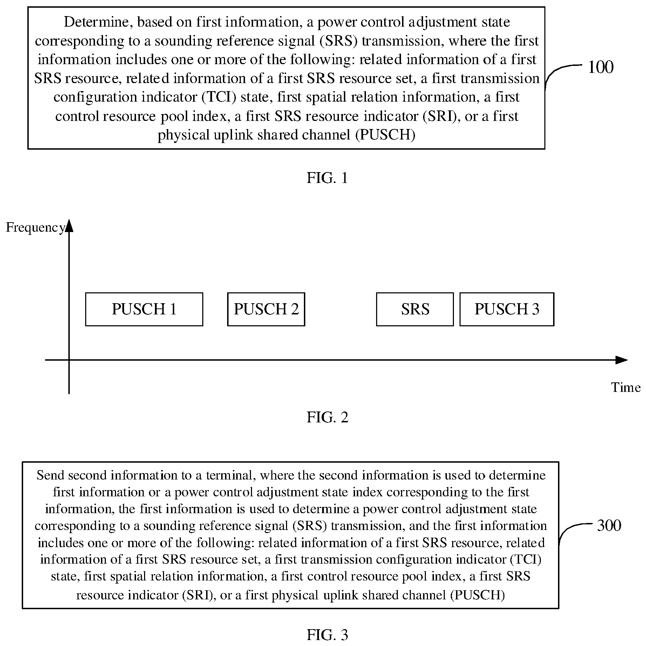

FIG. 1 is a first schematic flowchart of a method for determining a power control adjustment state provided by an embodiment of the present disclosure. The method is applied to a terminal, as shown in FIG. 1, the method includes the following steps.

step 100, determine, based on first information, a power control adjustment state corresponding to a sounding reference signal (SRS) transmission;
where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

Specifically, when performing the SRS transmission (which may be one or more), the terminal needs to determine a transmission power of the SRS transmission. Before determining the transmission power of the SRS transmission, it is necessary to first determine the power control adjustment state corresponding to the SRS transmission. After determining the power control adjustment state corresponding to the SRS transmission, the transmission power of the SRS transmission may be calculated using the power control adjustment state. In the present disclosure, the power control adjustment state corresponding to the SRS transmission is determined based on the first information.

Where the first information includes one or more of the following: the related information of the first SRS resource, the related information of the first SRS resource set, the first transmission configuration indicator (Transmission Configuration Indicator, TCI) state, the first spatial relation information (SpatialRelationInfo), the first control resource pool index, the first SRS Resource Indicator (SRS Resource Indicator, SRI), or the first PUSCH.

For ease of description, the rest of the embodiments of the present disclosure use CORESETPoolIndex to represent the control resource pool index.

In some implementations, for a scenario where there is one SRS transmission, the power control adjustment state corresponding to the SRS transmission may be determined based on one or more of the related information of the first SRS resource, the related information of the first SRS resource set, the first TCI state, the first spatial relation information, the first CORESETPoolIndex, the first SRI, or the first PUSCH.

An example of determining the power control adjustment state corresponding to the SRS transmission based on the first TCI state and based on the related information of the first SRS resource is:
if the first SRS resource corresponding to the SRS transmission is configured with the first TCI state, or is configured by a network device to follow the first TCI state, then a transmission power of the SRS transmission is determined using a SRS power power adjustment state corresponding to the first TCI state (for example, the SRS power control adjustment state corresponding to an SRS power control adjustment state index configured by the network device for the first TCI state); otherwise, the transmission power of the SRS transmission is determined based on the power control adjustment state index configured by the network device for the first SRS resource (i.e., the related information of the first SRS resource).

An example of determining the power control adjustment state corresponding to the SRS transmission based on the first spatial relation information and based on the related information of the first SRS resource set is:
if the first SRS resource set corresponding to the SRS transmission is configured with the first spatial relation information, or is configured by the network device to follow the first spatial relation information, then the transmission power of the SRS transmission is determined using the SRS power power adjustment state corresponding to the first spatial relation information (for example, the SRS power control adjustment state corresponding to the SRS power control adjustment state index configured by the network device for the first spatial relation information); otherwise, the transmission power of the SRS transmission is determined based on the power control adjustment state index configured by the network device for the first SRS resource set (i.e., the related information of the first SRS resource set).

An example of determining the power control adjustment state corresponding to the SRS transmission based on the first CORESETPoolIndex and based on the related information of the first SRS resource is:
if the first SRS resource corresponding to the SRS transmission is configured with the first CORESETPoolIndex, or is configured by the network device to follow the first CORESETPoolIndex, the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index configured by the network device for the first SRS resource (i.e., the related information of the first SRS resource).

An example of determining the power control adjustment state corresponding to the SRS transmission based on the first CORESETPoolIndex and based on the first TCI state is:
if the first SRS resource corresponding to the SRS transmission is configured with the first CORESETPoolIndex, or is configured by the network device to follow the first CORESETPoolIndex, then the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index corresponding to the first TCI state configured by the network device for the first SRS resource.

An example of determining the power control adjustment state corresponding to the SRS transmission based on the first spatial relation information and based on the first TCI state is:
if the first SRS resource corresponding to the SRS transmission is configured with the first spatial relation information, or is configured by the network device to follow the first spatial relation information, then the transmission power of the SRS transmission is determined using the SRS power power adjustment state corresponding to the first spatial relation information (for example, the SRS power control adjustment state corresponding to the SRS power control adjustment state index configured by the network device for the first spatial relation information); otherwise, the transmission power of the SRS transmission is determined based on the power control adjustment state index corresponding to the first TCI state configured by the network device for the first SRS resource.

An example of determining the power control adjustment state corresponding to the SRS transmission based on the first CORESETPoolIndex and based on the first SRI is:
if the first SRS resource corresponding to the SRS transmission is configured with the first CORESETPoolIndex, or is configured by the network device to follow the SRS power control adjustment state corresponding to the power control adjustment state index corresponding to the first CORESETPoolIndex, then the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index corresponding to the first SRI.

An example of determining the power control adjustment state corresponding to the SRS transmission based on the first TCI state and based on the first PUSCH is:
if the first SRS resource corresponding to the SRS transmission is configured with the first TCI state, or is configured by the network device to follow the first TCI state, then the transmission power of the SRS transmission is determined using the SRS power power adjustment state corresponding to the first TCI state (for example, the SRS power control adjustment state corresponding to the SRS power control adjustment state index configured by the network device for the first TCI state); otherwise, the transmission power of the SRS transmission is determined based on the power control adjustment state index corresponding to the first PUSCH (or the power control adjustment state corresponding to the first PUSCH).

It should be noted that the above examples of determining the power control adjustment state corresponding to the SRS transmission are only examples. It should be understood that the terminal may determine the power control adjustment state corresponding to the SRS transmission based on any combination of one or more of the above first information, which is not specifically limited in the present disclosure.

In some implementations, for a scenario with multiple SRS transmissions, different SRS transmissions may determine the power control adjustment state based on different first information. For example, some SRS transmissions may determine the power control adjustment state based on the related information of the first SRS resource, while others may determine the power control adjustment state based on the first TCI state; or, some SRS transmissions may determine the power control adjustment state based on the first spatial relation information, while others may determine the power control adjustment state based on the first PUSCH; or, some SRS transmissions may determine the power control adjustment state based on the first CORESETPoolIndex, while others may determine the power control adjustment state based on the first SRI; and so on.

When determining the power control adjustment state corresponding to the SRS transmission, the following may be determined according to indications from a network side and/or rules agreed upon by the protocol: which specific SRS resource or SRS resources the first SRS resource refers to, or which specific SRS resource set or SRS resource sets the first SRS resource set refers to, or which specific TCI state or TCI states the first TCI state refers to, or which specific spatial relation information the first spatial relation information refers to, or which specific CORESETPoolIndex or CORESETPoolIndices the first CORESETPoolIndex refers to, or which specific SRI or SRIs the first SRI refers to, or which specific PUSCH or PUSCHes the first PUSCH refers to.

According to the method for determining the power control adjustment state provided by the embodiment of the present disclosure, the terminal may determine the power control adjustment state corresponding to the SRS transmission based on one or more of the related information of the first SRS resource, the related information of the first SRS resource set, the first TCI state, the first spatial relation information, the first control resource pool index, the first SRI, or the first PUSCH, and then determine the transmission power of the SRS transmission, thereby solving the problem in some scenarios that the terminal cannot determine the power control adjustment state corresponding to the SRS transmission, or the determined power control adjustment state is unreasonable, and being able to adapt to needs of determining the power control adjustment state corresponding to the SRS transmission in various scenarios, improving flexibility of determining the power control adjustment state corresponding to the SRS transmission.

In the present disclosure, the "first" in expressions such as the first information, the first SRS resource, the first SRS resource set, the first TCI state, the first spatial relation information, the first control resource pool index, the first SRI, the first PUSCH is only used to facilitate description when referring to an object, and does not constitute a limitation on the corresponding object. For example, the first information refers to information used to determine the power control adjustment state corresponding to the SRS transmission, the first SRS resource refers to an SRS resource used to determine the power control adjustment state corresponding to the SRS transmission, the first SRS resource set refers to an SRS resource set used to determine the power control adjustment state corresponding to the SRS transmission, the first TCI state refers to a TCI state used to determine the power control adjustment state corresponding to the SRS transmission, the first spatial relation information refers to spatial relation information used to determine the power control adjustment state corresponding to the SRS transmission, the first control resource pool index refers to a control resource pool index used to determine the power control adjustment state corresponding to the SRS transmission, the first SRI refers to an SRI used to determine the power control adjustment state corresponding to the SRS transmission, and the first PUSCH refers to a PUSCH used to determine the power control adjustment state corresponding to the SRS transmission.

In some embodiments, the first SRS resource is the SRS resource corresponding to the SRS transmission. For example, the SRS transmission is an SRS transmission performed based on the first SRS resource. In this embodiment, the terminal may determine the power control adjustment state corresponding to the SRS transmission based on the SRS resource corresponding to the SRS transmission.

In some embodiments, the first SRS resource set is the SRS resource set corresponding to the SRS transmission. For example, the SRS transmission is an SRS transmission performed based on the SRS resource included in the first SRS resource set. In this embodiment, the terminal may determine the power control adjustment state corresponding to the SRS transmission based on the SRS resource set corresponding to the SRS transmission.

In some embodiments, the related information of the first SRS resource includes one or more of the following.
(1) information used to indicate the power control adjustment state index corresponding to the first SRS resource. The information may explicitly indicate the power control adjustment state index corresponding to the first SRS resource.

The information may be any information that may be used to indicate the power control adjustment state index corresponding to the first SRS resource, which is not specifically limited.

For example, the network device configures configuration information of the first SRS resource, where the configuration information includes a parameter indicating the power control adjustment state index, and the parameter is the information used to indicate the power control adjustment state index corresponding to the first SRS resource.

For example, when the network device configures configuration information of the SRS resource set where the first SRS resource is located, the configuration information includes a parameter used to indicate the power control adjustment state index corresponding to the SRS resource in the set, and the parameter is the information used to indicate the power control adjustment state index corresponding to the first SRS resource.

For example, scheduling signaling for the first SRS resource scheduled by the network device includes a parameter indicating the power control adjustment state index, and the parameter is the information used to indicate the power control adjustment state index corresponding to the first SRS resource.

For example, scheduling signaling for the SRS resource set where the first SRS resource is located scheduled by the network device includes a parameter used to indicate the power control adjustment state index corresponding to the SRS resource in the set, and the parameter is the information used to indicate the power control adjustment state index corresponding to the first SRS resource.

(2) an order of the first SRS resource in the SRS resource set. The order of the first SRS resource in the SRS resource set may be used to implicitly indicate the power control adjustment state index corresponding to the first SRS resource.

The SRS resource set refers to the SRS resource set where the first SRS resource is located. In some embodiments, the SRS resource set may include: an SRS resource set composed of SRS resources whose usage (usage) is configured as a codebook (codebook); or an SRS resource set composed of SRS resources whose usage is configured as a nonCodebook (noncodebook); or an SRS resource set configured by the network side, for example, srs-ResourceToAddModList or srs-ResourceToAddModListDCI-0-2.

In some implementations, the order of the first SRS resource in the SRS resource set refers to an order corresponding to the first SRS resource after sorting all SRS resources in the SRS resource set. For example, the SRS resource set includes SRS resource #1, SRS resource #2, SRS resource #3, and SRS resource #4. These four SRS resources are sorted in sequence. Assuming the first SRS resource is SRS resource #2, the order of the first SRS resource in the SRS resource set is 2.

In some implementations, the order of the first SRS resource in the SRS resource set refers to an order corresponding to the first SRS resource after sorting all SRS resources, in the SRS resource set, that have a usage which is the same as that of the first SRS resource. For example, the SRS resource set includes SRS resource #1, SRS resource #2, SRS resource #3, and SRS resource #4. Among these four SRS resources, SRS resource #2, SRS resource #3, and SRS resource #4 have the same usage, and these three SRS resources are sorted in sequence. Assuming the first SRS resource is SRS resource #2, the order of the first SRS resource in the SRS resource set is 1.

In some implementations, the terminal may determine, based on a predefined rule, the power control adjustment state index corresponding to the first SRS resource according to the order of the first SRS resource in the SRS resource set. The predefined rule may be agreed upon by the protocol, or indicated by the network device to the terminal. In some embodiments, the terminal may send the predefined rule to the network device.

Taking the SRS resource set including two SRS resources as an example, one example is: in the SRS resource set, a first SRS resource corresponds to power control adjustment state l=0; and a second SRS resource corresponds to power control adjustment state l=1; or, in the SRS resource set, the SRS resource with a lower index (index) corresponds to power control adjustment state l=0; and the SRS resource with a higher index corresponds to power control adjustment state l=1.

(3) an identifier (identifier, ID) of the first SRS resource. The ID of the first SRS resource may be used to implicitly indicate the power control adjustment state index corresponding to the first SRS resource.

In some implementations, the terminal may determine, based on a predefined rule, the power control adjustment state index corresponding to the first SRS resource according to the ID of the first SRS resource or the relative magnitude of the ID of the first SRS resource with respect to IDs of other SRS resources.

The other SRS resources may be all SRS resources in the SRS resource set where the first SRS resource is located, or may be all SRS resources, in the SRS resource set, that have the same usage as the first SRS resource.

In some implementations, the higher the ID of the SRS resource in the SRS resource set, the larger the corresponding power control adjustment state index; or, the lower the ID of the SRS resource in the SRS resource set, the larger the corresponding power control adjustment state index.

For example, the first SRS resource is included in srs-ResourceToAddModList and its usage is the codebook. The power control adjustment state index corresponding to the first SRS resource is determined based on the ID of the SRS resource, in srs-ResourceToAddModList, whose usage is codebook. Specifically, taking srs-ResourceToAddModList that includes two SRS resources whose usage is the codebook as an example. If the ID (i.e., srs-ResourceId) of the first SRS resource is lower, its corresponding power control adjustment state index is 0, otherwise it is 1; or, if the ID of the first SRS resource is lower, its corresponding power control adjustment state index is 1, otherwise it is 0.

The related information of the first SRS resource includes one or more of the above items, which may improve flexibility of determining the power control adjustment state corresponding to the SRS transmission.

In some embodiments, the related information of the first SRS resource set includes one or more of the following.
(1) information used to indicate a power control adjustment state index corresponding to the first SRS resource set. The information may explicitly indicate the power control adjustment state index corresponding to the first SRS resource set.

The information may be any information that may be used to indicate the power control adjustment state index corresponding to the first SRS resource set, which is not specifically limited.

For example, the network device configures configuration information of the first SRS resource set, where the configuration information includes a parameter indicating the power control adjustment state index, and the parameter is the information used to indicate the power control adjustment state index corresponding to the first SRS resource set. In some embodiments, the parameter is suitable for all SRS resources included in the first SRS resource set. That is, all SRS resources included in the first SRS resource set all correspond to the parameter.

For example, scheduling signaling for the first SRS resource set scheduled by the network device includes a parameter indicating the power control adjustment state index, where the parameter is the information used to indicate the power control adjustment state index corresponding to the first SRS resource set. In some embodiments, the parameter is suitable for all SRS resources included in the first SRS resource set. That is, all SRS resources included in the first SRS resource set all correspond to the parameter.

(2) an order of the first SRS resource set in an SRS resource set list. The order of the first SRS resource set in the SRS resource set list may be used to implicitly indicate the power control adjustment state index corresponding to the first SRS resource set.

The SRS resource set list refers to the SRS resource set list where the first SRS resource set is located. In some embodiments, the SRS resource set list may include: an SRS resource set list composed of SRS resource sets whose usage (usage) is configured as the codebook (codebook); or an SRS resource set list composed of SRS resource sets whose usage is configured as the nonCodebook (noncodebook); or an SRS resource set list configured by the network side, for example, srs-ResourceSetToAddModList or srs-ResourceSetToAddModListDCI-0-2.

In some implementations, the order of the first SRS resource set in the SRS resource set list refers to the order corresponding to the first SRS resource set after sorting all SRS resource sets in the SRS resource set list. For example, the SRS resource set list includes SRS resource set 1, SRS resource set 2, SRS resource set 3, and SRS resource set 4. These four SRS resource sets are sorted in sequence. Assuming the first SRS resource set is SRS resource set 2, the order of the first SRS resource set in the SRS resource set list is 2.

In some implementations, the order of the first SRS resource set in the SRS resource set list refers to the order corresponding to the first SRS resource set after sorting all SRS resource sets, in the SRS resource set list, that have the same usage as the first SRS resource set. For example, the SRS resource set list includes SRS resource set 1, SRS resource set 2, SRS resource set 3, and SRS resource set 4. Among these four SRS resource sets, SRS resource set 2, SRS resource set 3, and SRS resource set 4 have the same usage, and these three SRS resource sets are sorted in sequence. Assuming the first SRS resource set is SRS resource set 2, the order of the first SRS resource set in the SRS resource set list is 1.

In some implementations, the terminal may determine, based on a predefined rule, the power control adjustment state index corresponding to the first SRS resource set according to the order of the first SRS resource set in the SRS resource set list. The predefined rule may be agreed upon by the protocol, or indicated by the network device to the terminal. In some embodiments, the terminal sends the predefined rule to the network device.

Taking an SRS resource set list including two SRS resource sets as an example, one example is: in the SRS resource set list, the first SRS resource set corresponds to power control adjustment state l=0; and the second SRS resource set corresponds to power control adjustment state l=1; or, in the SRS resource set list, the SRS resource set with a lower index corresponds to power control adjustment state l=0; and the SRS resource set with a higher index corresponds to power control adjustment state l=1.

(3) an identifier of the first SRS resource set. The ID of the first SRS resource set may be used to implicitly indicate the power control adjustment state index corresponding to the first SRS resource set.

In some implementations, the terminal may determine, based on a predefined rule, the power control adjustment state index corresponding to the first SRS resource set according to the ID of the first SRS resource set or the relative magnitude of the ID of the first SRS resource with respect to IDs of other SRS resource sets.

The other SRS resource sets may be all SRS resource sets in the SRS resource set list where the first SRS resource set is located, or may be all SRS resource sets, in the SRS resource set list, that have the same usage as the first SRS resource set.

In some implementations, the higher the ID of the SRS resource set in the SRS resource set list, the larger the corresponding power control adjustment state index; or, the lower the ID of the SRS resource set in the SRS resource set list, the larger the corresponding power control adjustment state index.

For example, the first SRS resource set is included in srs-ResourceSetToAddModList and its usage is the codebook. The power control adjustment state index corresponding to the first SRS resource set is determined based on the ID of the SRS resource set, in srs-ResourceSetToAddModList, whose usage is the codebook. Specifically, taking srs-ResourceSetToAddModList that includes two SRS resource sets whose usage is the codebook as an example, if the ID (i.e., srs-ResourceSetId) of the first SRS resource set is lower, its corresponding power control adjustment state index is 0, otherwise it is 1; or, if the ID of the first SRS resource set is lower, its corresponding power control adjustment state index is 1, otherwise it is 0.

The related information of the first SRS resource set includes one or more of the above items, which is beneficial to improving the flexibility of determining the power control adjustment state corresponding to the SRS transmission.

In some embodiments, the first TCI state includes one or more of the following.
(1) a TCI state corresponding to the SRS transmission.

In some implementations, the TCI state corresponding to the SRS transmission is the TCI state used to determine spatial filter (spatial filter) used for the SRS transmission. In some implementations, the TCI state corresponding to the SRS transmission is the TCI state used to determine a beam used for the SRS transmission.

In some implementations, the TCI state corresponding to the SRS transmission includes the TCI state configured by the network device for the SRS resource corresponding to the SRS transmission.

(2) a TCI state associated with a control resource set (Control Resource Set, CORESET) where first downlink control information (Downlink Control Information, DCI) is located, where the first DCI is the DCI that triggers the SRS transmission.

(3) a TCI state associated with a PUSCH, where the PUSCH is associated with an SRS resource corresponding to the SRS transmission. For example, one or more of precoding information, information of the number of layers, or beam information of the PUSCH associated with the SRS resource corresponding to the SRS transmission are determined based on the SRS resource corresponding to the SRS transmission.

(4) a TCI state associated with a target SRS resource, where the target SRS resource is one of the following:
an SRS resource with a lowest identifier (ID) in the SRS resource set where an SRS resource corresponding to the SRS transmission is located;
an SRS resource with a highest ID in the SRS resource set where the SRS resource corresponding to the SRS transmission is located;
an SRS resource indicated by a network device in the SRS resource set where the SRS resource corresponding to the SRS transmission is located;
an SRS resource with a smallest sequence number in the SRS resource set where the SRS resource corresponding to the SRS transmission is located; or,
an SRS resource with a largest sequence number in the SRS resource set where the SRS resource corresponding to the SRS transmission is located.

The first TCI state includes one or more of the above items, which is beneficial to improving the flexibility of determining the power control adjustment state corresponding to the SRS transmission.

In some embodiments, the first spatial relation information includes one or more of the following.
(1) spatial relation information corresponding to the SRS transmission.

In some implementations, the spatial relation information corresponding to the SRS transmission includes the spatial relation information configured by the network device for the SRS resource corresponding to the SRS transmission.

(2) spatial relation information associated with a CORESET where first DCI is located, where the first DCI is the DCI that triggers the SRS transmission.

(3) spatial relation information associated with the PUSCH, where the PUSCH is associated with an SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first spatial relation information includes one or more of the above items, which is beneficial to improving the flexibility of determining the power control adjustment state corresponding to the SRS transmission.

In some embodiments, the first control resource pool index includes one or more of the following.
(1) a control resource pool index corresponding to the SRS transmission.

In some implementations, the CORESETPoolIndex corresponding to the SRS transmission includes the CORESETPoolIndex configured by the network device for the SRS resource corresponding to the SRS transmission.

(2) a control resource pool index corresponding to a CORESET where first DCI is located, where the first DCI is the DCI that triggers the SRS transmission.

(3) a control resource pool index corresponding to a PUSCH associated with an SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first control resource pool index includes one or more of the above items, which is beneficial to improving the flexibility of determining the power control adjustment state corresponding to the SRS transmission.

In some embodiments, the first SRI includes one or more of the following SRIs.
(1) a second SRI, used to indicate: an SRS resource corresponding to the SRS transmission.
(2) a third SRI, used to indicate: an SRS resource corresponding to the PUSCH associated with the SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first SRI includes one or more of the above items, which is beneficial to improving the flexibility of determining the power control adjustment state corresponding to the SRS transmission.

In some embodiments, the first PUSCH includes one or more of the following.
(1) a PUSCH associated with the SRS transmission.

For example, one or more of the precoding matrix, the number of layers, or the beam information (spatial relation information) of the first PUSCH are determined based on the SRS transmission.

(2) a PUSCH transmitted based on SRS resources in an SRS resource set corresponding to the SRS transmission. The SRS resource set corresponding to the SRS transmission is: the SRS resource set where the SRS resource corresponding to the SRS transmission is located.

The "SRS resource in the SRS resource set where the SRS resource corresponding to the SRS transmission is located" may include the SRS resource corresponding to the SRS transmission, or other SRS resources, in the SRS resource set where the SRS resource corresponding to the SRS transmission is located, other than the "SRS resource corresponding to the SRS transmission".

For example, one or more of the precoding matrix, the number of layers, or the beam information (spatial relation information) of the first PUSCH are determined based on the SRS resource corresponding to the SRS transmission. Or, one or more of the precoding matrix, the number of layers, and the beam information (spatial relation information) of the first PUSCH are determined based on other SRS resources (which are SRS resources other than the SRS resource corresponding to the SRS transmission) in the SRS resource set where the SRS resource corresponding to the SRS transmission is located.

(3) a PUSCH transmitted based on the SRS resource set corresponding to the SRS transmission. The SRS resource set corresponding to the SRS transmission is: the SRS resource set where the SRS resource corresponding to the SRS transmission is located.

For example, one or more of the precoding matrix, the number of layers, or the beam information (spatial relation information) of the first PUSCH are determined based on the SRS resources in the SRS resource set where the SRS resource corresponding to the SRS transmission is located.

(4) a PUSCH whose transmission time domain position overlaps with the SRS transmission.

For example, the SRS transmission is on symbols 10 to 14 of a time slot. If a PUSCH transmission is on symbols 0 to 11 of the time slot, then this PUSCH may be considered the first PUSCH.

(5) a PUSCH, before the SRS transmission, that is closest to the SRS transmission.

FIG. 2 is an exemplary diagram of an SRS transmission and a PUSCH transmission provided by an embodiment of the present disclosure. As shown in FIG. 2, in this example, the PUSCH, before the SRS transmission, that is closest to the SRS transmission is PUSCH 2. The PUSCH 2 may be considered as the first PUSCH.

(6) a PUSCH, after the SRS transmission, that is closest to the SRS transmission.

Still taking FIG. 2 as an example, in this example, the PUSCH, after the SRS transmission, that is closest to the SRS transmission is PUSCH 3. The PUSCH 3 may be considered as the first PUSCH.

(7) a PUSCH whose time interval from the SRS transmission is less than a preset value.

In some implementations, the time interval between the PUSCH transmission and the SRS transmission may be a time interval between a start time of the PUSCH transmission and a start time of the SRS transmission; or a time interval between an end time of an earlier transmission (the one earlier in time) and a start time of a later transmission (the one later in time) of the two (refers to the PUSCH transmission and the SRS transmission).

Still taking FIG. 2 as an example, in this example, the PUSCH with a closer time interval to the SRS transmission is PUSCH 3. If the time interval between the PUSCH 3 and the SRS transmission is less than the preset value, then the PUSCH 3 may be considered as the first PUSCH.

The first PUSCH includes one or more of the above items, which is beneficial to improving the flexibility of determining the power control adjustment state corresponding to the SRS transmission.

In some implementations, the determining, based on the first information, the power control adjustment state corresponding to the SRS transmission includes:
determining the power control adjustment state index corresponding to the first information;
determining, based on the power control adjustment state index corresponding to the first information, the power control adjustment state corresponding to the SRS transmission.

Specifically, when determining the power control adjustment state corresponding to the SRS transmission, the terminal may first determine the power control adjustment state index based on the first information (i.e., the power control adjustment state index corresponding to the first information, or referred to as a first power control adjustment state index). In some embodiments, the power control adjustment state index corresponding to the first information is: an SRS power control adjustment state index or a PUSCH power control adjustment state index, thereby improving the flexibility of determining the power control adjustment state index.

In some implementations, the power control adjustment state index corresponding to the first information (which may also be expressed as the power control adjustment state index associated with the first information, or the power control adjustment state index indicated by the first information, etc.) may be indicated by the network side and/or determined based on the predefined rule. For example, the network side indicates an association relationship between the first information and the power control adjustment state index, or the network side and the terminal pre-agree on the association relationship between the first information and the power control adjustment state index.

After determining the first power control adjustment state index, the terminal may determine the power control adjustment state corresponding to the SRS transmission based on the first power control adjustment state index. By first determining the power control adjustment state index corresponding to the first information, and then determining the power control adjustment state corresponding to the SRS transmission according to the determined power control adjustment state index, flexibility of determining the power control adjustment state is greatly improved, thereby being able to meet the needs of determining the power control adjustment state corresponding to the SRS transmission in various scenarios.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information, thereby improving the flexibility of determining the power control adjustment state. For example, assuming that the first power control adjustment state index is determined to be an index l, the power control adjustment state corresponding to the SRS transmission may be the SRS power control adjustment state with index l (i.e., a value of the power control adjustment state corresponding to the SRS transmission is equal to a value of the SRS power control adjustment state with index l), or may be the PUSCH power control adjustment state with index l (i.e., the value of the power control adjustment state corresponding to the SRS transmission is equal to a value of the PUSCH power control adjustment state with index l).

In some embodiments, the determining the power control adjustment state index corresponding to the first information includes:
determining the power control adjustment state index corresponding to the first information based on one or more of the following.
(1) configuration information of the first SRS resource, where the configuration information of the first SRS resource includes information used to indicate the power control adjustment state index corresponding to the first SRS resource.

For example, a configuration parameter of the first SRS resource includes a parameter indicating the power control adjustment state index, and the power control adjustment state index indicated by the parameter is the power control adjustment state index corresponding to the first SRS resource; or, a power control configuration parameter of the first SRS resource includes a parameter indicating the power control adjustment state index, and the power control adjustment state index indicated by the parameter is the power control adjustment state index corresponding to the first SRS resource.

In some implementations, a field closedLoopIndex (closed-loop index) used to indicate the power control adjustment state index may be included in a radio resource control (Radio Resource Control, RRC) signaling SRS-Resource (SRS resource) used to configure the first SRS resource, and the power control adjustment state index indicated by the field is the power control adjustment state index corresponding to the first SRS resource.

(2) configuration information of an SRS resource set where the first SRS resource is located, where the configuration information of the SRS resource set where the first SRS resource is located includes information used to indicate the power control adjustment state index corresponding to the first SRS resource.

For example, a configuration parameter of the SRS resource set where the first SRS resource is located includes a parameter used to indicate the power control adjustment state index corresponding to the SRS resource in the set; or, a power control configuration parameter of the SRS resource set where the first SRS resource is located includes a parameter used to indicate the power control adjustment state index corresponding to the SRS resource in the set.

In some implementations, a field closedLoopIndex used to indicate the power control adjustment state index corresponding to the SRS resource in the set may be included in a RRC signaling SRS-ResourceSet (SRS resource set) used to configure the SRS resource set where the first SRS resource is located.

(3) scheduling signaling for the first SRS resource, where the scheduling signaling for the first SRS resource includes information used to indicate the power control adjustment state index corresponding to the first SRS resource.

The scheduling signaling for the first SRS resource refers to a signaling used to schedule the first SRS resource, that is, the signaling indicating the terminal to transmit the SRS corresponding to the first SRS resource.

In some embodiments, the scheduling signaling includes a RRC signaling, a medium access control control element (Media Access Control Control Element, MAC CE), a DCI signaling, etc.

For example, a field used to indicate the SRS power control adjustment state index may be included in the DCI (e.g., DCI format 0_1 / DCI format 0_2 / DCI format 1_1 / DCI format 1_2) used to schedule the first SRS resource, and the power control adjustment state index indicated by the field is the power control adjustment state index corresponding to the first SRS resource.

For another example, the network device configures, for a trigger state corresponding to the first SRS resource, a power control adjustment state index associated with the trigger state corresponding to the first SRS resource. The first SRS resource corresponds to the power control adjustment state index when the first SRS resource is triggered via the trigger state. The DCI scheduling the first SRS resource triggers the terminal to transmit the SRS by indicating the trigger state corresponding to the first SRS resource. The power control adjustment state used to determine the transmission power of the SRS is the SRS power control adjustment state or the PUSCH power control adjustment state corresponding to the index.

(4) scheduling signaling for the SRS resource set where the first SRS resource is located, where the scheduling signaling for the SRS resource set where the first SRS resource is located includes information used to indicate the power control adjustment state index corresponding to the first SRS resource.

The scheduling signaling for the SRS resource set where the first SRS resource is located refers to the signaling used to schedule the SRS resource set where the first SRS resource is located, that is, the signaling indicating the terminal to transmit the SRS corresponding to the SRS resource set where the first SRS resource is located.

In some embodiments, the scheduling signaling includes the RRC signaling, the MAC CE, the DCI signaling, etc.

For example, the field used to indicate the power control adjustment state index corresponding to the SRS resource in the set may be included in the DCI (e.g., DCI format 0_1 / DCI format 0_2 / DCI format 1_1 / DCI format 1_2) used to schedule the SRS resource set where the first SRS resource is located.

For another example, the network device configures, for a trigger state corresponding to the SRS resource set where the first SRS resource is located, a power control adjustment state index associated with the trigger state corresponding to the SRS resource set where the first SRS resource is located. The SRS resources included in the SRS resource set correspond to the power control adjustment state index when the SRS resource set is triggered via the trigger state. The DCI triggers the terminal to transmit the SRS by indicating the trigger state corresponding to the SRS resource set. The power control adjustment state used to determine the transmission power of the SRS is the SRS power control adjustment state or the PUSCH power control adjustment state corresponding to the index.

(5) configuration information of the first SRS resource set, where the configuration information of the first SRS resource set includes information used to indicate the power control adjustment state index corresponding to the first SRS resource set.

For example, a configuration parameter of the first SRS resource set includes a parameter indicating the power control adjustment state index, and the power control adjustment state index indicated by the parameter is the power control adjustment state index corresponding to the first SRS resource set; or, a power control configuration parameter of the first SRS resource set includes a parameter indicating the power control adjustment state index, and the power control adjustment state index indicated by the parameter is the power control adjustment state index corresponding to the first SRS resource set.

In some implementations, a field closedLoopIndex used to indicate the power control adjustment state index may be included in the RRC signaling SRS-ResourceSet (SRS resource set) used to configure the first SRS resource set, and the power control adjustment state index indicated by the field is the power control adjustment state index corresponding to the first SRS resource set.

(6) scheduling signaling for the first SRS resource set, where the scheduling signaling for the first SRS resource set includes information used to indicate the power control adjustment state index corresponding to the first SRS resource set.

The scheduling signaling for the first SRS resource set refers to the signaling used to schedule the first SRS resource set, that is, the signaling indicating the terminal to transmit the SRS corresponding to the first SRS resource set.

In some embodiments, the scheduling signaling includes the RRC signaling, the MAC CE, the DCI signaling, etc.

For example, a field used to indicate the SRS power control adjustment state index may be included in the DCI (e.g., DCI format 0_1 / DCI format 0_2 / DCI format 1_1 / DCI format 1_2) used to schedule the first SRS resource set, and the power control adjustment state index indicated by the field is the power control adjustment state index corresponding to the first SRS resource set.

For another example, the network device configures, for the trigger state corresponding to the first SRS resource set, the power control adjustment state index associated with the trigger state corresponding to the first SRS resource set. The SRS resources included in the first SRS resource set correspond to the power control adjustment state index when the first SRS resource set is triggered via the trigger state. The DCI triggers the terminal to transmit the SRS by indicating the trigger state corresponding to the first SRS resource set. The power control adjustment state used to determine the transmission power of the SRS is the SRS power control adjustment state or the PUSCH power control adjustment state corresponding to the index.

(7) configuration information of the first TCI state, where the configuration information of the first TCI state includes information used to indicate the power control adjustment state index corresponding to the first TCI state.

For example, the first TCI state is configured with information indicating the power control adjustment state index, and the power control adjustment state index indicated by the information is the power control adjustment state index corresponding to the first TCI state.

In some implementations, the first TCI state is configured with information indicating the power control adjustment state index, which is configured via one or more of the RRC signaling, the MAC-CE signaling, or the DCI signaling. Taking the configuration involving the RRC signaling and the MAC-CE signaling as an example, the network device may configure multiple power control adjustment state indices via the RRC signaling, and the MAC CE selects one power control adjustment state index therefrom.

(8) a power control adjustment state index configured for the SRS in an uplink power control parameter corresponding to the first TCI state.

For example, the power control adjustment state index closedLoopIndex configured in p0AlphaSetforSRS in the uplink power control parameter (Uplink-powerControl) corresponding to the first TCI state may be used as the power control adjustment state index corresponding to the first TCI state.

(9) a power control adjustment state index configured for the PUSCH or a physical uplink control channel (PUCCH) in the uplink power control parameter corresponding to the first TCI state.

For example, the power control adjustment state index closedLoopIndex configured in p0AlphaSetforPUSCH or p0AlphaSetforPUCCH in the uplink power control parameter (Uplink-powerControl) corresponding to the first TCI state may be used as the power control adjustment state index corresponding to the first TCI state.

(10) configuration information of the first spatial relation information, where the configuration information of the first spatial relation information includes information used to indicate the power control adjustment state index corresponding to the first spatial relation information.

For example, the first spatial relation information is configured with information indicating the power control adjustment state index, and the power control adjustment state index indicated by the information is the power control adjustment state index corresponding to the first spatial relation information.

In some implementations, the first spatial relation information is configured with information indicating the power control adjustment state index, which is configured via one or more of the RRC signaling, the MAC-CE signaling, or the DCI signaling. Taking the configuration involving the RRC signaling and the MAC-CE signaling as an example, the network device may configure multiple power control adjustment state indices via the RRC signaling, and the MAC CE selects one power control adjustment state index therefrom.

(11) information used to indicate the power control adjustment state index corresponding to the first control resource pool index.

For example, the network device indicates an association relationship between the CORESETPoolIndex and the power control adjustment state index, and then the terminal may determine the power control adjustment state index corresponding to the first CORESETPoolIndex based on the association relationship indicated by the network device.

(12) information used to indicate the power control adjustment state index corresponding to the first SRI.

For example, the network device indicates an association relationship between the SRI and the power control adjustment state index, and then the terminal may determine the power control adjustment state index corresponding to the first SRI based on the association relationship indicated by the network device.

(13) a protocol predefined rule.

For example, the terminal may determine, based on the protocol predefined rule, the power control adjustment state index corresponding to the first SRS resource according to an order of the first SRS resource in the SRS resource set.

For example, the terminal may determine, based on the protocol predefined rule, the power control adjustment state index corresponding to the first SRS resource according to an ID of the first SRS resource or the relative magnitude of the ID of the first SRS resource with respect to IDs of other SRS resources.

For example, the terminal may determine the power control adjustment state index corresponding to the first TCI state based on an order of the first TCI state among all TCI states in a unified TCI (i.e., common TCI).

By using multiple different manners for the network device to indicate the corresponding power control adjustment state index for the first information, the manners for determining the power control adjustment state index are more flexible and diverse, thereby being able to meet the needs of determining the power control adjustment state corresponding to the SRS transmission in various scenarios.

In some embodiments, in a case that the first information includes the first PUSCH, the determining, based on the first information, the power control adjustment state corresponding to the SRS transmission includes:
determining, based on the first PUSCH power control adjustment state, the power control adjustment state corresponding to the SRS transmission.

Specifically, for the case that the first information includes the first PUSCH, the terminal may directly use the first PUSCH power control adjustment state to determine the power control adjustment state corresponding to the SRS transmission. For example, the first PUSCH power control adjustment state is used as the power control adjustment state corresponding to the SRS transmission.

By directly determining the power control adjustment state corresponding to the SRS transmission based on the first PUSCH power control adjustment state, a processing complexity on a terminal side is reduced, and efficiency of determining the power control adjustment state is improved.

In some embodiments, the method further includes:
receiving first configuration information sent by a network device, where the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

Specifically, the network device may include information used to indicate the TCI state, the spatial relation information, the CORESETPoolIndex, etc., in the configuration information of the SRS resource or the SRS resource set, so that the terminal may determine the TCI state, the spatial relation information, or the CORESETPoolIndex corresponding to the SRS transmission based on the configuration information of the SRS resource or the SRS resource set corresponding to the SRS transmission.

In some implementations, the information used to indicate the TCI state, the spatial relation information, the CORESETPoolIndex, etc. may be a directly configured TCI state, spatial relation information, or CORESETPoolIndex.

In some implementations, the information used to indicate the TCI state, the spatial relation information, the CORESETPoolIndex, etc. may be an index, and the index has an association relationship with the TCI state, the spatial relation information, or the CORESETPoolIndex, and corresponding TCI state, spatial relation information, or CORESETPoolIndex may be determined based on the index.

For example, using RRC signaling to configure the TCI state for the SRS resource or the SRS resource set may include two manners.

Manner 1: directly configure the TCI state in the configuration information of the SRS resource or the SRS resource set.

Manner 2: indicate an index in the configuration information of the SRS resource or the SRS resource set, where the index has an association relationship with the TCI state. For example, an index value of 0 indicates one TCI state, and an index value of 1 indicates another TCI state. The TCI state corresponding to values may be configured by the RRC signaling, or, derived based on one or more of the RRC signaling, the MAC-CE signaling, or the DCI signaling. In some embodiments, the TCI state associated with the index is one or more of the currently active unified TCIs.

For another example, using the RRC signaling to configure the spatial relation information for the SRS resource or the SRS resource set may include two manners.

Manner 1: directly configure the spatial relation information in the configuration information of the SRS resource or the SRS resource set.

Manner 2: indicate an index in the configuration information of the SRS resource or the SRS resource set, where the index has an association relationship with the spatial relation information. For example, an index value of 0 indicates one piece of spatial relation information, and an index value of 1 indicates another piece of spatial relation information. The spatial relation information corresponding to values may be configured by the RRC signaling, or derived based on one or more of the RRC signaling, the MAC-CE signaling, or the DCI signaling.

For another example, using the RRC signaling to configure the CORESETPoolIndex for the SRS resource or the SRS resource set may include two manners.

Manner 1: directly configure the CORESETPoolIndex in the configuration information of the SRS resource or the SRS resource set.

Manner 2: indicate an index in the configuration information of the SRS resource or the SRS resource set, where the index has an association relationship with the CORESETPoolIndex. For example, an index value of 0 indicates one CORESETPoolIndex, and an index value of 1 indicates another CORESETPoolIndex. The CORESETPoolIndex corresponding to values may be configured by the RRC signaling, or derived based on one or more of the RRC signaling, the MAC-CE signaling, or the DCI signaling.

In some embodiments, the terminal maintains multiple SRS power control adjustment states. Each SRS power control adjustment state corresponds to one power control adjustment state index. The SRS power control adjustment state corresponding to one power control adjustment state index may be a cumulative value or a non-cumulative value.

By including information used to indicate the TCI state, the spatial relation information, the CORESETPoolIndex, etc., in the configuration information of the SRS resource or the SRS resource set, the terminal side can quickly and accurately determine the first information, and determine the power control adjustment state based on the first information, improving the efficiency of determining the power control adjustment state.

FIG. 3 is a second schematic flowchart of a method for determining a power control adjustment state provided by an embodiment of the present disclosure, where the method is applied to a network device (e.g., a base station), as shown in FIG. 3, the method includes the following step.

Step 300, send second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

Specifically, when performing the SRS transmission (which may be one or more), the terminal needs to determine a transmission power of the SRS transmission. Before determining the transmission power of the SRS transmission, it is necessary to first determine the power control adjustment state corresponding to the SRS transmission. After determining the power control adjustment state corresponding to the SRS transmission, the transmission power of the SRS transmission may be calculated using the power control adjustment state.

In the present disclosure, the power control adjustment state corresponding to the SRS transmission is determined based on the first information. The network device may send the second information to the terminal, and the second information may be used to determine the first information or the power control adjustment state index corresponding to the first information.

The first information includes one or more of the following: the related information of the first SRS resource, the related information of the first SRS resource set, the first TCI state, the first spatial relation information, the first control resource pool index, the first SRI, or the first PUSCH.

In some implementations, for a scenario where there is one SRS transmission, the power control adjustment state corresponding to the SRS transmission may be determined based on one or more of the related information of the first SRS resource, the related information of the first SRS resource set, the first TCI state, the first spatial relation information, the first control resource pool index, the first SRI, or the first PUSCH.

An example of determining the power control adjustment state corresponding to the SRS transmission based on the first TCI state and based on the related information of the first SRS resource is:
if the first SRS resource corresponding to the SRS transmission is configured with the first TCI state, or is configured by the network device to follow the first TCI state, then the transmission power of the SRS transmission is determined using the SRS power power adjustment state corresponding to the first TCI state (for example, the SRS power control adjustment state corresponding to the SRS power control adjustment state index configured by the network device for the first TCI state); otherwise, the transmission power of the SRS transmission is determined based on the power control adjustment state index configured by the network device for the first SRS resource (i.e., the related information of the first SRS resource).

An example of determining the power control adjustment state corresponding to the SRS transmission based on the first spatial relation information and based on the related information of the first SRS resource set is:
if the first SRS resource set corresponding to the SRS transmission is configured with the first spatial relation information, or is configured by the network device to follow the first spatial relation information, then the transmission power of the SRS transmission is determined using the SRS power power adjustment state corresponding to the first spatial relation information (for example, the SRS power control adjustment state corresponding to the SRS power control adjustment state index configured by the network device for the first spatial relation information); otherwise, the transmission power of the SRS transmission is determined based on the power control adjustment state index configured by the network device for the first SRS resource set (i.e., the related information of the first SRS resource set).

An example of determining the power control adjustment state corresponding to the SRS transmission based on the first CORESETPoolIndex and based on the related information of the first SRS resource is:
if the first SRS resource corresponding to the SRS transmission is configured with the first CORESETPoolIndex, or is configured by the network device to follow the first CORESETPoolIndex, then the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index configured by the network device for the first SRS resource (i.e., the related information of the first SRS resource).

An example of determining the power control adjustment state corresponding to the SRS transmission based on the first CORESETPoolIndex and based on the first TCI state is:
if the first SRS resource corresponding to the SRS transmission is configured with the first CORESETPoolIndex, or is configured by the network device to follow the first CORESETPoolIndex, then the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index corresponding to the first TCI state configured by the network device for the first SRS resource.

An example of determining the power control adjustment state corresponding to the SRS transmission based on the first spatial relation information and based on the first TCI state is:
if the first SRS resource corresponding to the SRS transmission is configured with the first spatial relation information, or is configured by the network device to follow the first spatial relation information, then the transmission power of the SRS transmission is determined using the SRS power power adjustment state corresponding to the first spatial relation information (for example, the SRS power control adjustment state corresponding to the SRS power control adjustment state index configured by the network device for the first spatial relation information); otherwise, the transmission power of the SRS transmission is determined based on the power control adjustment state index corresponding to the first TCI state configured by the network device for the first SRS resource.

An example of determining the power control adjustment state corresponding to the SRS transmission based on the first CORESETPoolIndex and based on the first SRI is:
if the first SRS resource corresponding to the SRS transmission is configured with the first CORESETPoolIndex, or is configured by the network device to follow the first CORESETPoolIndex, then the transmission power of the SRS transmission is determined using the SRS power power adjustment state corresponding to the first CORESETPoolIndex (for example, the SRS power control adjustment state corresponding to the SRS power control adjustment state index configured by the network device for the first CORESETPoolIndex); otherwise, the transmission power of the SRS transmission is determined based on the power control adjustment state index corresponding to the first SRI.

An example of determining the power control adjustment state corresponding to the SRS transmission based on the first TCI state and based on the first PUSCH is:
if the first SRS resource corresponding to the SRS transmission is configured with the first TCI state, or is configured by the network device to follow the first TCI state, then the transmission power of the SRS transmission is determined using the SRS power power adjustment state corresponding to the first TCI state (for example, the SRS power control adjustment state corresponding to the SRS power control adjustment state index configured by the network device for the first TCI state); otherwise, the transmission power of the SRS transmission is determined based on the power control adjustment state index corresponding to the first PUSCH (or the power control adjustment state corresponding to the first PUSCH).

It should be noted that the above examples of determining the power control adjustment state corresponding to the SRS transmission are only examples. It should be understood that the terminal may determine the power control adjustment state corresponding to the SRS transmission based on any combination of one or more of the above first information, which is not specifically limited in the present disclosure.

In some implementations, for a scenario with multiple SRS transmissions, different SRS transmissions may determine the power control adjustment state based on different first information. For example, some SRS transmissions may determine the power control adjustment state based on the related information of the first SRS resource, while others may determine the power control adjustment state based on the first TCI state; or, some SRS transmissions may determine the power control adjustment state based on the first spatial relation information, while others may determine the power control adjustment state based on the first PUSCH; or, some SRS transmissions may determine the power control adjustment state based on the first CORESETPoolIndex, while others may determine the power control adjustment state based on the first SRI; and so on.

When determining the power control adjustment state corresponding to the SRS transmission, the following may be determined according to indications from a network side and/or rules agreed upon by the protocol: which specific SRS resource or SRS resources the first SRS resource refers to, or which specific SRS resource set or SRS resource sets the first SRS resource set refers to, or which specific TCI state or TCI states the first TCI state refers to, or which specific spatial relation information the first spatial relation information refers to, or which specific CORESETPoolIndex or CORESETPoolIndices the first CORESETPoolIndex refers to, or which specific SRI or SRIs the first SRI refers to, or which specific PUSCH or PUSCHes the first PUSCH refers to.

According to the method for determining the power control adjustment state provided by the embodiment of the present disclosure, the network device may send the second information to the terminal, and the second information may be used to determine the first information or the power control adjustment state index corresponding to the first information, so that the terminal may determine the power control adjustment state corresponding to the SRS transmission based on one or more of the related information of the first SRS resource, the related information of the first SRS resource set, the first TCI state, the first spatial relation information, the first control resource pool index, the first SRI, and the first PUSCH, and then determine the transmission power of the SRS transmission, thereby solving the problem in some scenarios that the terminal cannot determine the power control adjustment state corresponding to the SRS transmission, or the determined power control adjustment state is unreasonable, and being able to adapt to needs of determining the power control adjustment state corresponding to the SRS transmission in various scenarios, improving flexibility of determining the power control adjustment state corresponding to the SRS transmission .

In some embodiments, the power control adjustment state corresponding to the SRS transmission is determined based on the power control adjustment state index corresponding to the first information.

Specifically, when determining the power control adjustment state corresponding to the SRS transmission, the terminal may first determine the power control adjustment state index based on the first information (i.e., the power control adjustment state index corresponding to the first information, or referred to as a first power control adjustment state index). In some embodiments, the power control adjustment state index corresponding to the first information is: an SRS power control adjustment state index or a PUSCH power control adjustment state index, thereby improving the flexibility of determining the power control adjustment state index.

In some implementations, the power control adjustment state index corresponding to the first information (which may also be expressed as the power control adjustment state index associated with the first information, or the power control adjustment state index indicated by the first information, etc.) may be indicated by the network side and/or determined based on the predefined rule. For example, the network side indicates an association relationship between the first information and the power control adjustment state index, or the network side and the terminal pre-agree on the association relationship between the first information and the power control adjustment state index.

After determining the first power control adjustment state index, the terminal may determine the power control adjustment state corresponding to the SRS transmission based on the first power control adjustment state index. By first determining the power control adjustment state index corresponding to the first information, and then determining the power control adjustment state corresponding to the SRS transmission according to the determined power control adjustment state index, flexibility of determining the power control adjustment state is greatly improved, thereby being able to meet the needs of determining the power control adjustment state corresponding to the SRS transmission in various scenarios.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information, thereby improving the flexibility of determining the power control adjustment state. For example, assuming that the first power control adjustment state index is determined to be an index l, the power control adjustment state corresponding to the SRS transmission may be the SRS power control adjustment state with index l (i.e., a value of the power control adjustment state corresponding to the SRS transmission is equal to a value of the SRS power control adjustment state with index l), or may be the PUSCH power control adjustment state with index l (i.e., the value of the power control adjustment state corresponding to the SRS transmission is equal to a value of the PUSCH power control adjustment state with index l).

In some embodiments, in a case that the first information includes the first PUSCH, the power control adjustment state corresponding to the SRS transmission is determined based on the first PUSCH power control adjustment state.

Specifically, for the case that the first information includes the first PUSCH, the terminal may directly use the first PUSCH power control adjustment state to determine the power control adjustment state corresponding to the SRS transmission. For example, the first PUSCH power control adjustment state is used as the power control adjustment state corresponding to the SRS transmission.

By directly determining the power control adjustment state corresponding to the SRS transmission based on the first PUSCH power control adjustment state, a processing complexity on a terminal side is reduced, and efficiency of determining the power control adjustment state is improved.

In some embodiments, the first SRS resource is the SRS resource corresponding to the SRS transmission. For example, the SRS transmission is an SRS transmission performed based on the first SRS resource. In this embodiment, the terminal may determine the power control adjustment state corresponding to the SRS transmission based on the SRS resource corresponding to the SRS transmission.

In some embodiments, the first SRS resource set is the SRS resource set corresponding to the SRS transmission. For example, the SRS transmission is an SRS transmission performed based on the SRS resource included in the first SRS resource set. In this embodiment, the terminal may determine the power control adjustment state corresponding to the SRS transmission based on the SRS resource set corresponding to the SRS transmission.

In some embodiments, the related information of the first SRS resource includes one or more of the following.
(1) information used to indicate the power control adjustment state index corresponding to the first SRS resource. The information may explicitly indicate the power control adjustment state index corresponding to the first SRS resource.

The information may be any information that may be used to indicate the power control adjustment state index corresponding to the first SRS resource, which is not specifically limited.

For example, the network device configures configuration information of the first SRS resource, where the configuration information includes a parameter indicating the power control adjustment state index, and the parameter is the information used to indicate the power control adjustment state index corresponding to the first SRS resource.

For example, when the network device configures configuration information of the SRS resource set where the first SRS resource is located, the configuration information includes a parameter used to indicate the power control adjustment state index corresponding to the SRS resource in the set, and the parameter is the information used to indicate the power control adjustment state index corresponding to the first SRS resource.

For example, scheduling signaling for the first SRS resource scheduled by the network device includes a parameter indicating the power control adjustment state index, and the parameter is the information used to indicate the power control adjustment state index corresponding to the first SRS resource.

For example, scheduling signaling for the SRS resource set where the first SRS resource is located scheduled by the network device includes a parameter used to indicate the power control adjustment state index corresponding to the SRS resource in the set, and the parameter is the information used to indicate the power control adjustment state index corresponding to the first SRS resource.

(2) an order of the first SRS resource in the SRS resource set. The order of the first SRS resource in the SRS resource set may be used to implicitly indicate the power control adjustment state index corresponding to the first SRS resource.

The SRS resource set refers to the SRS resource set where the first SRS resource is located. In some embodiments, the SRS resource set may include: an SRS resource set composed of SRS resources whose usage (usage) is configured as a codebook (codebook); or an SRS resource set composed of SRS resources whose usage is configured as a nonCodebook (noncodebook); or an SRS resource set configured by the network side, for example, srs-ResourceToAddModList or srs-ResourceToAddModListDCI-0-2.

In some implementations, the order of the first SRS resource in the SRS resource set refers to an order corresponding to the first SRS resource after sorting all SRS resources in the SRS resource set. For example, the SRS resource set includes SRS resource #1, SRS resource #2, SRS resource #3, and SRS resource #4. These four SRS resources are sorted in sequence. Assuming the first SRS resource is SRS resource #2, the order of the first SRS resource in the SRS resource set is 2.

In some implementations, the order of the first SRS resource in the SRS resource set refers to an order corresponding to the first SRS resource after sorting all SRS resources, in the SRS resource set, that have a usage which is the same as that of the first SRS resource. For example, the SRS resource set includes SRS resource #1, SRS resource #2, SRS resource #3, and SRS resource #4. Among these four SRS resources, SRS resource #2, SRS resource #3, and SRS resource #4 have the same usage, and these three SRS resources are sorted in sequence. Assuming the first SRS resource is SRS resource #2, the order of the first SRS resource in the SRS resource set is 1.

In some implementations, the terminal may determine, based on a predefined rule, the power control adjustment state index corresponding to the first SRS resource according to the order of the first SRS resource in the SRS resource set. The predefined rule may be agreed upon by the protocol, or indicated by the network device to the terminal. In some embodiments, the terminal sends the predefined rule to the network device.

Taking the SRS resource set including two SRS resources as an example, one example is: in the SRS resource set, a first SRS resource corresponds to power control adjustment state l=0; and a second SRS resource corresponds to power control adjustment state l=1; or, in the SRS resource set, the SRS resource with a lower index (index) corresponds to power control adjustment state l=0; and the SRS resource with a higher index corresponds to power control adjustment state l=1.

(3) an identifier (identifier, ID) of the first SRS resource. The ID of the first SRS resource may be used to implicitly indicate the power control adjustment state index corresponding to the first SRS resource.

In some implementations, the terminal may determine, based on a predefined rule, the power control adjustment state index corresponding to the first SRS resource according to the ID of the first SRS resource or the relative magnitude of the ID of the first SRS resource with respect to IDs of other SRS resources.

The other SRS resources may be all SRS resources in the SRS resource set where the first SRS resource is located, or may be all SRS resources, in the SRS resource set, that have the same usage as the first SRS resource.

In some implementations, the higher the ID of the SRS resource in the SRS resource set, the larger the corresponding power control adjustment state index; or, the lower the ID of the SRS resource in the SRS resource set, the larger the corresponding power control adjustment state index.

For example, the first SRS resource is included in srs-ResourceToAddModList and its usage is the codebook. The power control adjustment state index corresponding to the first SRS resource is determined based on the ID of the SRS resource, in srs-ResourceToAddModList, whose usage is codebook. Specifically, taking srs-ResourceToAddModList that includes two SRS resources whose usage is the codebook as an example. If the ID (i.e., srs-ResourceId) of the first SRS resource is lower, its corresponding power control adjustment state index is 0, otherwise it is 1; or, if the ID of the first SRS resource is lower, its corresponding power control adjustment state index is 1, otherwise it is 0.

The related information of the first SRS resource includes one or more of the above items, which may improve flexibility of determining the power control adjustment state corresponding to the SRS transmission.

In some embodiments, the related information of the first SRS resource set includes one or more of the following.
(1) information used to indicate a power control adjustment state index corresponding to the first SRS resource set. The information may explicitly indicate the power control adjustment state index corresponding to the first SRS resource set.

The information may be any information that may be used to indicate the power control adjustment state index corresponding to the first SRS resource set, which is not specifically limited.

For example, the network device configures configuration information of the first SRS resource set, where the configuration information includes a parameter indicating the power control adjustment state index, and the parameter is the information used to indicate the power control adjustment state index corresponding to the first SRS resource set. In some embodiments, the parameter is suitable for all SRS resources included in the first SRS resource set. That is, all SRS resources included in the first SRS resource set all correspond to the parameter.

For example, scheduling signaling for the first SRS resource set scheduled by the network device includes a parameter indicating the power control adjustment state index, where the parameter is the information used to indicate the power control adjustment state index corresponding to the first SRS resource set. In some embodiments, the parameter is suitable for all SRS resources included in the first SRS resource set. That is, all SRS resources included in the first SRS resource set all correspond to the parameter.

(2) an order of the first SRS resource set in an SRS resource set list. The order of the first SRS resource set in the SRS resource set list may be used to implicitly indicate the power control adjustment state index corresponding to the first SRS resource set.

The SRS resource set list refers to the SRS resource set list where the first SRS resource set is located. In some embodiments, the SRS resource set list may include: an SRS resource set list composed of SRS resource sets whose usage (usage) is configured as the codebook (codebook); or an SRS resource set list composed of SRS resource sets whose usage is configured as the nonCodebook (noncodebook); or an SRS resource set list configured by the network side, for example, srs-ResourceSetToAddModList or srs-ResourceSetToAddModListDCI-0-2.

In some implementations, the order of the first SRS resource set in the SRS resource set list refers to the order corresponding to the first SRS resource set after sorting all SRS resource sets in the SRS resource set list. For example, the SRS resource set list includes SRS resource set 1, SRS resource set 2, SRS resource set 3, and SRS resource set 4. These four SRS resource sets are sorted in sequence. Assuming the first SRS resource set is SRS resource set 2, the order of the first SRS resource set in the SRS resource set list is 2.

In some implementations, the order of the first SRS resource set in the SRS resource set list refers to the order corresponding to the first SRS resource set after sorting all SRS resource sets, in the SRS resource set list, that have the same usage as the first SRS resource set. For example, the SRS resource set list includes SRS resource set 1, SRS resource set 2, SRS resource set 3, and SRS resource set 4. Among these four SRS resource sets, SRS resource set 2, SRS resource set 3, and SRS resource set 4 have the same usage, and these three SRS resource sets are sorted in sequence. Assuming the first SRS resource set is SRS resource set 2, the order of the first SRS resource set in the SRS resource set list is 1.

In some implementations, the terminal may determine, based on a predefined rule, the power control adjustment state index corresponding to the first SRS resource set according to the order of the first SRS resource set in the SRS resource set list. The predefined rule may be agreed upon by the protocol, or indicated by the network device to the terminal. In some embodiments, the terminal sends the predefined rule to the network device.

Taking an SRS resource set list including two SRS resource sets as an example, one example is: in the SRS resource set list, the first SRS resource set corresponds to power control adjustment state l=0; and the second SRS resource set corresponds to power control adjustment state l=1; or, in the SRS resource set list, the SRS resource set with a lower index corresponds to power control adjustment state l=0; and the SRS resource set with a higher index corresponds to power control adjustment state l=1.

(3) an identifier of the first SRS resource set. The ID of the first SRS resource set may be used to implicitly indicate the power control adjustment state index corresponding to the first SRS resource set.

In some implementations, the terminal may determine, based on a predefined rule, the power control adjustment state index corresponding to the first SRS resource set according to the ID of the first SRS resource set or the relative magnitude of the ID of the first SRS resource with respect to IDs of other SRS resource sets.

The other SRS resource sets may be all SRS resource sets in the SRS resource set list where the first SRS resource set is located, or may be all SRS resource sets, in the SRS resource set list, that have the same usage as the first SRS resource set.

In some implementations, the higher the ID of the SRS resource set in the SRS resource set list, the larger the corresponding power control adjustment state index; or, the lower the ID of the SRS resource set in the SRS resource set list, the larger the corresponding power control adjustment state index.

For example, the first SRS resource set is included in srs-ResourceSetToAddModList and its usage is the codebook. The power control adjustment state index corresponding to the first SRS resource set is determined based on the ID of the SRS resource set, in srs-ResourceSetToAddModList, whose usage is the codebook. Specifically, taking srs-ResourceSetToAddModList that includes two SRS resource sets whose usage is the codebook as an example, if the ID (i.e., srs-ResourceSetId) of the first SRS resource set is lower, its corresponding power control adjustment state index is 0, otherwise it is 1; or, if the ID of the first SRS resource set is lower, its corresponding power control adjustment state index is 1, otherwise it is 0.

The related information of the first SRS resource set includes one or more of the above items, which is beneficial to improving the flexibility of determining the power control adjustment state corresponding to the SRS transmission.

In some embodiments, the first TCI state includes one or more of the following.
(1) a TCI state corresponding to the SRS transmission.

In some implementations, the TCI state corresponding to the SRS transmission is the TCI state used to determine spatial filter (spatial filter) used for the SRS transmission. In some implementations, the TCI state corresponding to the SRS transmission is the TCI state used to determine a beam used for the SRS transmission.

In some implementations, the TCI state corresponding to the SRS transmission includes the TCI state configured by the network device for the SRS resource corresponding to the SRS transmission.

(2) a TCI state associated with a control resource set (Control Resource Set, CORESET) where first downlink control information (Downlink Control Information, DCI) is located, where the first DCI is the DCI that triggers the SRS transmission.

(3) a TCI state associated with a PUSCH, where the PUSCH is associated with an SRS resource corresponding to the SRS transmission. For example, one or more of precoding information, information of the number of layers, or beam information of the PUSCH associated with the SRS resource corresponding to the SRS transmission are determined based on the SRS resource corresponding to the SRS transmission.

(4) a TCI state associated with a target SRS resource, where the target SRS resource is one of the following:
an SRS resource with a lowest identifier (ID) in the SRS resource set where an SRS resource corresponding to the SRS transmission is located;
an SRS resource with a highest ID in the SRS resource set where the SRS resource corresponding to the SRS transmission is located;
an SRS resource indicated by the network device in the SRS resource set where the SRS resource corresponding to the SRS transmission is located;
an SRS resource with a smallest sequence number in the SRS resource set where the SRS resource corresponding to the SRS transmission is located; or,
an SRS resource with a largest sequence number in the SRS resource set where the SRS resource corresponding to the SRS transmission is located.

The first TCI state includes one or more of the above items, which is beneficial to improving the flexibility of determining the power control adjustment state corresponding to the SRS transmission.

In some embodiments, the first spatial relation information includes one or more of the following.
(1) spatial relation information corresponding to the SRS transmission.

In some implementations, the spatial relation information corresponding to the SRS transmission includes the spatial relation information configured by the network device for the SRS resource corresponding to the SRS transmission.

(2) spatial relation information associated with a CORESET where first DCI is located, where the first DCI is the DCI that triggers the SRS transmission.

(3) spatial relation information associated with the PUSCH, where the PUSCH is associated with an SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first spatial relation information includes one or more of the above items, which is beneficial to improving the flexibility of determining the power control adjustment state corresponding to the SRS transmission.

In some embodiments, the first control resource pool index includes one or more of the following.
(1) a control resource pool index corresponding to the SRS transmission.

In some implementations, the CORESETPoolIndex corresponding to the SRS transmission includes the CORESETPoolIndex configured by the network device for the SRS resource corresponding to the SRS transmission.

(2) a control resource pool index corresponding to a CORESET where first DCI is located, where the first DCI is the DCI that triggers the SRS transmission.

(3) a control resource pool index corresponding to a PUSCH associated with an SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first control resource pool index includes one or more of the above items, which is beneficial to improving the flexibility of determining the power control adjustment state corresponding to the SRS transmission.

In some embodiments, the first SRI includes one or more of the following SRIs.
(1) a second SRI, used to indicate: an SRS resource corresponding to the SRS transmission.
(2) a third SRI, used to indicate: an SRS resource corresponding to the PUSCH associated with the SRS resource corresponding to the SRS transmission. For example, one or more of the precoding information, the information of the number of layers, or the beam information of the "PUSCH associated with the SRS resource corresponding to the SRS transmission" are determined based on the SRS resource corresponding to the SRS transmission.

The first SRI includes one or more of the above items, which is beneficial to improving the flexibility of determining the power control adjustment state corresponding to the SRS transmission.

In some embodiments, the first PUSCH includes one or more of the following.
(1) a PUSCH associated with the SRS transmission.

For example, one or more of the precoding matrix, the number of layers, or the beam information (spatial relation information) of the first PUSCH are determined based on the SRS transmission.

(2) a PUSCH transmitted based on SRS resources in an SRS resource set corresponding to the SRS transmission. The SRS resource set corresponding to the SRS transmission is: the SRS resource set where the SRS resource corresponding to the SRS transmission is located.

The "SRS resource in the SRS resource set where the SRS resource corresponding to the SRS transmission is located" may include the SRS resource corresponding to the SRS transmission, or other SRS resources in the SRS resource set where the SRS resource corresponding to the SRS transmission is located other than the "SRS resource corresponding to the SRS transmission".

For example, one or more of the precoding matrix, the number of layers, or the beam information (spatial relation information) of the first PUSCH are determined based on the SRS resource corresponding to the SRS transmission. Or, one or more of the precoding matrix, the number of layers, and the beam information (spatial relation information) of the first PUSCH are determined based on other SRS resources (which are SRS resources other than the SRS resource corresponding to the SRS transmission) in the SRS resource set where the SRS resource corresponding to the SRS transmission is located.

(3) a PUSCH transmitted based on the SRS resource set corresponding to the SRS transmission. The SRS resource set corresponding to the SRS transmission is: the SRS resource set where the SRS resource corresponding to the SRS transmission is located.

For example, one or more of the precoding matrix, the number of layers, or the beam information (spatial relation information) of the first PUSCH are determined based on the SRS resources in the SRS resource set where the SRS resource corresponding to the SRS transmission is located.

(4) a PUSCH whose transmission time domain position overlaps with the SRS transmission.

For example, the SRS transmission is on symbols 10 to 14 of a time slot. If a PUSCH transmission is on symbols 0 to 11 of the time slot, then this PUSCH may be considered the first PUSCH.

(5) a PUSCH, before the SRS transmission, that is closest to the SRS transmission.

FIG. 2 is an exemplary diagram of an SRS transmission and a PUSCH transmission provided by an embodiment of the present disclosure. As shown in FIG. 2, in this example, the PUSCH, before the SRS transmission, that is closest to the SRS transmission is PUSCH 2. The PUSCH 2 may be considered as the first PUSCH.

(6) a PUSCH, after the SRS transmission, that is closest to the SRS transmission.

Still taking FIG. 2 as an example, in this example, the PUSCH, after the SRS transmission, that is closest to the SRS transmission is PUSCH 3. The PUSCH 3 may be considered as the first PUSCH.

(7) a PUSCH whose time interval from the SRS transmission is less than a preset value.

In some implementations, the time interval between the PUSCH transmission and the SRS transmission may be a time interval between a start time of the PUSCH transmission and a start time of the SRS transmission; or a time interval between an end time of an earlier transmission (the one earlier in time) and a start time of a later transmission (the one later in time) of the two (refers to the PUSCH transmission and the SRS transmission).

Still taking FIG. 2 as an example, in this example, the PUSCH with a closer time interval to the SRS transmission is PUSCH 3. If the time interval between the PUSCH 3 and the SRS transmission is less than the preset value, then the PUSCH 3 may be considered as the first PUSCH.

The first PUSCH includes one or more of the above items, which is beneficial to improving the flexibility of determining the power control adjustment state corresponding to the SRS transmission.

In some embodiments, the second information includes one or more of the following.
(1) configuration information of the first SRS resource, where the configuration information of the first SRS resource includes information used to indicate the power control adjustment state index corresponding to the first SRS resource.

For example, a configuration parameter of the first SRS resource includes a parameter indicating the power control adjustment state index, and the power control adjustment state index indicated by the parameter is the power control adjustment state index corresponding to the first SRS resource; or, a power control configuration parameter of the first SRS resource includes a parameter indicating the power control adjustment state index, and the power control adjustment state index indicated by the parameter is the power control adjustment state index corresponding to the first SRS resource.

In some implementations, a field closedLoopIndex (closed-loop index) used to indicate the power control adjustment state index may be included in a radio resource control (Radio Resource Control, RRC) signaling SRS-Resource (SRS resource) used to configure the first SRS resource, and the power control adjustment state index indicated by the field is the power control adjustment state index corresponding to the first SRS resource.

(2) configuration information of an SRS resource set where the first SRS resource is located, where the configuration information of the SRS resource set where the first SRS resource is located includes information used to indicate the power control adjustment state index corresponding to the first SRS resource.

For example, a configuration parameter of the SRS resource set where the first SRS resource is located includes a parameter used to indicate the power control adjustment state index corresponding to the SRS resource in the set; or, a power control configuration parameter of the SRS resource set where the first SRS resource is located includes a parameter used to indicate the power control adjustment state index corresponding to the SRS resource in the set.

In some implementations, a field closedLoopIndex used to indicate the power control adjustment state index corresponding to the SRS resource in the set may be included in a RRC signaling SRS-ResourceSet (SRS resource set) used to configure the SRS resource set where the first SRS resource is located.

(3) scheduling signaling for the first SRS resource, where the scheduling signaling for the first SRS resource includes information used to indicate the power control adjustment state index corresponding to the first SRS resource.

The scheduling signaling for the first SRS resource refers to a signaling used to schedule the first SRS resource, that is, the signaling indicating the terminal to transmit the SRS corresponding to the first SRS resource.

In some embodiments, the scheduling signaling includes a RRC signaling, a medium access control control element (Media Access Control Control Element, MAC CE), a DCI signaling, etc.

For example, a field used to indicate the SRS power control adjustment state index may be included in the DCI (e.g., DCI format 0_1 / DCI format 0_2 / DCI format 1_1 / DCI format 1_2) used to schedule the first SRS resource, and the power control adjustment state index indicated by the field is the power control adjustment state index corresponding to the first SRS resource.

For another example, the network device configures, for a trigger state corresponding to the first SRS resource, a power control adjustment state index associated with the trigger state corresponding to the first SRS resource. The first SRS resource corresponds to the power control adjustment state index when the first SRS resource is triggered via the trigger state. The DCI scheduling the first SRS resource triggers the terminal to transmit the SRS by indicating the trigger state corresponding to the first SRS resource. The power control adjustment state used to determine the transmission power of the SRS is the SRS power control adjustment state or the PUSCH power control adjustment state corresponding to the index.

(4) scheduling signaling for the SRS resource set where the first SRS resource is located, where the scheduling signaling for the SRS resource set where the first SRS resource is located includes information used to indicate the power control adjustment state index corresponding to the first SRS resource.

The scheduling signaling for the SRS resource set where the first SRS resource is located refers to the signaling used to schedule the SRS resource set where the first SRS resource is located, that is, the signaling indicating the terminal to transmit the SRS corresponding to the SRS resource set where the first SRS resource is located.

In some embodiments, the scheduling signaling includes the RRC signaling, the MAC CE, the DCI signaling, etc.

For example, the field used to indicate the power control adjustment state index corresponding to the SRS resource in the set may be included in the DCI (e.g., DCI format 0_1 / DCI format 0_2 / DCI format 1_1 / DCI format 1_2) used to schedule the SRS resource set where the first SRS resource is located.

For another example, the network device configures, for a trigger state corresponding to the SRS resource set where the first SRS resource is located, a power control adjustment state index associated with the trigger state corresponding to the SRS resource set where the first SRS resource is located. The SRS resources included in the SRS resource set correspond to the power control adjustment state index when the SRS resource set is triggered via the trigger state. The DCI triggers the terminal to transmit the SRS by indicating the trigger state corresponding to the SRS resource set. The power control adjustment state used to determine the transmission power of the SRS is the SRS power control adjustment state or the PUSCH power control adjustment state corresponding to the index.

(5) configuration information of the first SRS resource set, where the configuration information of the first SRS resource set includes information used to indicate the power control adjustment state index corresponding to the first SRS resource set.

For example, a configuration parameter of the first SRS resource set includes a parameter indicating the power control adjustment state index, and the power control adjustment state index indicated by the parameter is the power control adjustment state index corresponding to the first SRS resource set; or, a power control configuration parameter of the first SRS resource set includes a parameter indicating the power control adjustment state index, and the power control adjustment state index indicated by the parameter is the power control adjustment state index corresponding to the first SRS resource set.

In some implementations, a field closedLoopIndex used to indicate the power control adjustment state index may be included in the RRC signaling SRS-ResourceSet (SRS resource set) used to configure the first SRS resource set, and the power control adjustment state index indicated by the field is the power control adjustment state index corresponding to the first SRS resource set.

(6) scheduling signaling for the first SRS resource set, where the scheduling signaling for the first SRS resource set includes information used to indicate the power control adjustment state index corresponding to the first SRS resource set.

The scheduling signaling for the first SRS resource set refers to the signaling used to schedule the first SRS resource set, that is, the signaling indicating the terminal to transmit the SRS corresponding to the first SRS resource set.

In some embodiments, the scheduling signaling includes the RRC signaling, the MAC CE, the DCI signaling, etc.

For example, a field used to indicate the SRS power control adjustment state index may be included in the DCI (e.g., DCI format 0_1 / DCI format 0_2 / DCI format 1_1 / DCI format 1_2) used to schedule the first SRS resource set, and the power control adjustment state index indicated by the field is the power control adjustment state index corresponding to the first SRS resource set.

For another example, the network device configures, for the trigger state corresponding to the first SRS resource set, the power control adjustment state index associated with the trigger state corresponding to the first SRS resource set. The SRS resources included in the first SRS resource set correspond to the power control adjustment state index when the first SRS resource set is triggered via the trigger state. The DCI triggers the terminal to transmit the SRS by indicating the trigger state corresponding to the first SRS resource set. The power control adjustment state used to determine the transmission power of the SRS is the SRS power control adjustment state or the PUSCH power control adjustment state corresponding to the index.

(7) configuration information of the first TCI state, where the configuration information of the first TCI state includes information used to indicate the power control adjustment state index corresponding to the first TCI state.

For example, the first TCI state is configured with information indicating the power control adjustment state index, and the power control adjustment state index indicated by the information is the power control adjustment state index corresponding to the first TCI state.

In some implementations, the first TCI state is configured with information indicating the power control adjustment state index, which is configured via one or more of the RRC signaling, the MAC-CE signaling, or the DCI signaling. Taking the configuration involving the RRC signaling and the MAC-CE signaling as an example, the network device may configure multiple power control adjustment state indices via the RRC signaling, and the MAC CE selects one power control adjustment state index therefrom.

(8) a power control adjustment state index configured for the SRS in an uplink power control parameter corresponding to the first TCI state.

For example, the power control adjustment state index closedLoopIndex configured in p0AlphaSetforSRS in the uplink power control parameter (Uplink-powerControl) corresponding to the first TCI state may be used as the power control adjustment state index corresponding to the first TCI state.

(9) a power control adjustment state index configured for the PUSCH or a physical uplink control channel (PUCCH) in the uplink power control parameter corresponding to the first TCI state.

For example, the power control adjustment state index closedLoopIndex configured in p0AlphaSetforPUSCH or p0AlphaSetforPUCCH in the uplink power control parameter (Uplink-powerControl) corresponding to the first TCI state may be used as the power control adjustment state index corresponding to the first TCI state.

(10) configuration information of the first spatial relation information, where the configuration information of the first spatial relation information includes information used to indicate the power control adjustment state index corresponding to the first spatial relation information.

For example, the first spatial relation information is configured with information indicating the power control adjustment state index, and the power control adjustment state index indicated by the information is the power control adjustment state index corresponding to the first spatial relation information.

In some implementations, the first spatial relation information is configured with information indicating the power control adjustment state index, which is configured via one or more of the RRC signaling, the MAC-CE signaling, or the DCI signaling. Taking the configuration involving the RRC signaling and the MAC-CE signaling as an example, the network device may configure multiple power control adjustment state indices via the RRC signaling, and the MAC CE selects one power control adjustment state index therefrom.

(11) information used to indicate the power control adjustment state index corresponding to the first control resource pool index.

For example, the network device indicates an association relationship between the CORESETPoolIndex and the power control adjustment state index, and then the terminal may determine the power control adjustment state index corresponding to the first CORESETPoolIndex based on the association relationship indicated by the network device.

(12) information used to indicate the power control adjustment state index corresponding to the first SRI.

For example, the network device indicates an association relationship between the SRI and the power control adjustment state index, and then the terminal may determine the power control adjustment state index corresponding to the first SRI based on the association relationship indicated by the network device.

(13) a protocol predefined rule.

For example, the terminal may determine, based on the protocol predefined rule, the power control adjustment state index corresponding to the first SRS resource according to an order of the first SRS resource in the SRS resource set.

For example, the terminal may determine, based on the protocol predefined rule, the power control adjustment state index corresponding to the first SRS resource according to an ID of the first SRS resource or the relative magnitude of the ID of the first SRS resource with respect to IDs of other SRS resources.

For example, the terminal may determine the power control adjustment state index corresponding to the first TCI state based on an order of the first TCI state among all TCI states in a unified TCI (i.e., common TCI).

By using multiple different manners for the network device to indicate the corresponding power control adjustment state index for the first information, the manners for determining the power control adjustment state index are more flexible and diverse, thereby being able to meet the needs of determining the power control adjustment state corresponding to the SRS transmission in various scenarios.

In some embodiments, the second information includes first configuration information, and the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

Specifically, the network device may include information used to indicate the TCI state, the spatial relation information, the CORESETPoolIndex, etc., in the configuration information of the SRS resource or the SRS resource set, so that the terminal may determine the TCI state, the spatial relation information, or the CORESETPoolIndex corresponding to the SRS transmission based on the configuration information of the SRS resource or the SRS resource set corresponding to the SRS transmission.

In some implementations, the information used to indicate the TCI state, the spatial relation information, the CORESETPoolIndex, etc. may be a directly configured TCI state, spatial relation information, or CORESETPoolIndex.

In some implementations, the information used to indicate the TCI state, the spatial relation information, the CORESETPoolIndex, etc. may be an index, and the index has an association relationship with the TCI state, the spatial relation information, or the CORESETPoolIndex, and corresponding TCI state, spatial relation information, or CORESETPoolIndex may be determined based on the index.

For example, using RRC signaling to configure the TCI state for the SRS resource or the SRS resource set may include two manners.

Manner 1: directly configure the TCI state in the configuration information of the SRS resource or the SRS resource set.

Manner 2: indicate an index in the configuration information of the SRS resource or the SRS resource set, where the index has an association relationship with the TCI state. For example, an index value of 0 indicates one TCI state, and an index value of 1 indicates another TCI state. The TCI state corresponding to values may be configured by the RRC signaling, or, derived based on one or more of the RRC signaling, the MAC-CE signaling, or the DCI signaling. In some embodiments, the TCI state associated with the index is one or more of the currently active unified TCIs.

For another example, using the RRC signaling to configure the spatial relation information for the SRS resource or the SRS resource set may include two manners.

Manner 1: directly configure the spatial relation information in the configuration information of the SRS resource or the SRS resource set.

Manner 2: indicate an index in the configuration information of the SRS resource or the SRS resource set, where the index has an association relationship with the spatial relation information. For example, an index value of 0 indicates one piece of spatial relation information, and an index value of 1 indicates another piece of spatial relation information. The spatial relation information corresponding to values may be configured by the RRC signaling, or derived based on one or more of the RRC signaling, the MAC-CE signaling, or the DCI signaling.

For another example, using the RRC signaling to configure the CORESETPoolIndex for the SRS resource or the SRS resource set may include two manners.

Manner 1: directly configure the CORESETPoolIndex in the configuration information of the SRS resource or the SRS resource set.

Manner 2: indicate an index in the configuration information of the SRS resource or the SRS resource set, where the index has an association relationship with the CORESETPoolIndex. For example, an index value of 0 indicates one CORESETPoolIndex, and an index value of 1 indicates another CORESETPoolIndex. The CORESETPoolIndex corresponding to values may be configured by the RRC signaling, or derived based on one or more of the RRC signaling, the MAC-CE signaling, or the DCI signaling.

In some embodiments, the terminal maintains multiple SRS power control adjustment states. Each SRS power control adjustment state corresponds to one power control adjustment state index. The SRS power control adjustment state corresponding to one power control adjustment state index may be a cumulative value or a non-cumulative value.

By including information used to indicate the TCI state, the spatial relation information, the CORESETPoolIndex, etc., in the configuration information of the SRS resource or the SRS resource set, the terminal side can quickly and accurately determine the first information, and determine the power control adjustment state based on the first information, improving the efficiency of determining the power control adjustment state.

The methods provided by the various embodiments of the present disclosure are based on the same application concept. Therefore, the implementations of the methods may be referred to each other, and redundant descriptions are not elaborated.

The methods provided by the above embodiments of the present disclosure are illustrated below with examples of specific application scenarios.

### Example 1

The first power control adjustment state index is determined based on information used to indicate the power control adjustment state index corresponding to the first SRS resource set, or, the first power control adjustment state index is determined based on the control adjustment state index corresponding to the first SRS resource set;
the power control adjustment state is determined based on the first power control adjustment state index;
the transmission power of the SRS transmission is determined based on the power control adjustment state.

The first SRS resource set is the SRS resource set corresponding to the SRS transmission. For example, the SRS transmission is an SRS transmission performed based on the SRS resource included in the SRS resource set.

In some implementations, the power control adjustment state is the SRS power control adjustment state corresponding to the power control adjustment state index, i.e., the SRS power control adjustment state whose index is the power control adjustment state index. Or, the power control adjustment state is the PUSCH power control adjustment state whose index is the power control adjustment state index.

In some implementations, determining the power control adjustment state index based on the information used to indicate the power control adjustment state index corresponding to the SRS resource set includes: the power control adjustment state index is an index indicated by information used to indicate the power control adjustment state index corresponding to the SRS resource set.

In some implementations, the information is included in configuration information of the SRS resource set. For example, a parameter indicating the power control adjustment state index is included in a configuration parameter of the SRS resource set; or, a parameter indicating the power control adjustment state index is included in a power control configuration parameter of the SRS resource set.

For example, a field closedLoopIndex used to indicate the power control adjustment state index is included in the RRC signaling SRS-ResourceSet.

In some implementations, the information is included in the MAC CE or DCI signaling (i.e., the MAC CE or DCI signaling scheduling the SRS resource set) indicating the terminal to transmit the SRS resource set.

For example, a field used to indicate the SRS power control adjustment state index is included in the DCI (e.g., DCI format 0_1 / DCI format 0_2 / DCI format 1_1 / DCI format 1_2) scheduling the SRS resource set.

In some implementations, the power control adjustment state index is determined based on a parameter sent by the base station used to indicate the power control adjustment state index corresponding to the SRS resource set (i.e., information used to indicate the power control adjustment state index corresponding to the SRS resource set).

In some implementations, the parameter is included in the configuration information of the SRS resource set. For example, a parameter indicating the power control adjustment state index is included in the configuration parameter of the SRS resource set; or, a parameter indicating the power control adjustment state index is included in the power control configuration parameter of the SRS resource set.

In some implementations, the parameter is included in the MAC CE or DCI signaling (i.e., the MAC CE or DCI signaling scheduling the SRS resource set) indicating the terminal to transmit the SRS resource set.

In some implementations, the power control adjustment state index/the power control adjustment state index corresponding to the SRS resource set is determined based on an order of the SRS resource set in an SRS resource set list. Some examples of the SRS resource set list are: an SRS resource set list composed of SRS resource sets whose usage is configured as codebook; an SRS resource set list composed of SRS resource sets whose usage is configured as nonCodebook; an SRS resource set list configured by a base station, such as srs-ResourceSetToAddModList or srs-ResourceSetToAddModListDCI-0-2. In some implementations, the power control adjustment state index/the power control adjustment state index corresponding to the SRS resource set is determined based on the order, in the SRS resource set list, of SRS resource sets whose usage is the same as that of the SRS resource set.

Taking the SRS resource set list including two SRS resources as an example, one example is: in the SRS resource set list, the first SRS resource set corresponds to l=0; and the second SRS resource set corresponds to l=1; or, in the SRS resource set list, the SRS resource set with a lower index corresponds to l=0; and the SRS resource set with a higher index corresponds to l=1.

In some implementations, the power control adjustment state index/the power control adjustment state index corresponding to the SRS resource set is determined based on the ID corresponding to the SRS resource set.

In some implementations, the power control adjustment state index/the power control adjustment state index corresponding to the SRS resource set is determined based on the IDs corresponding to multiple SRS resource sets in the SRS resource set list.

In some implementations, the multiple SRS resource sets are SRS resource sets whose usage is the same as the usage of the SRS resource set.

In some implementations, the higher the ID corresponding to the SRS resource set in the SRS resource set list, the larger the corresponding power control adjustment state index; or, the lower the ID corresponding to the SRS resource set in the SRS resource set list, the larger the corresponding power control adjustment state index. For example, the SRS resource set corresponding to the SRS transmission is included in srs-ResourceSetToAddModList and its usage is codebook, and the power control adjustment state index is determined based on the ID of the SRS resource set, in srs-ResourceSetToAddModList, whose usage is codebook. Specifically, taking a case that srs-ResourceSetToAddModList includes two SRS resource sets whose usage is codebook as an example, if the ID (i.e., srs-ResourceSetId) of the SRS resource set corresponding to the SRS transmission is lower, its corresponding power control adjustment state index is 0, otherwise it is 1; or, if the ID of the SRS resource set corresponding to the SRS transmission is lower, its corresponding power control adjustment state index is 1, otherwise it is 0.

Example 2: (Example 2 is similar to Example 1, replacing the "SRS resource set" with the "SRS resource".)

A parameter sent by the base station used to indicate the power control adjustment state index corresponding to the SRS resource is received;
the power control adjustment state is determined based on the parameter;
the transmission power of the SRS transmission is determined based on the power control adjustment state.

The power control adjustment state is the SRS power control adjustment state corresponding to the index indicated by the parameter,
or, the power control adjustment state is the PUSCH power control adjustment state whose index is the power control adjustment state index.

In some implementations, the SRS transmission is the SRS transmission based on the SRS resource, and the parameter is included in the configuration information of the SRS resource.

In some implementations, the parameter is included in the signaling scheduling the SRS resource, and the signaling includes one or more of the RRC signaling, the MAC CE, or the DCI signaling.

Combination with Example 1:
The configuration information of the SRS resource includes configuration information of the SRS resource set where the SRS resource is located, and the parameter is included in the configuration information of the SRS resource set where the SRS resource is located.

The MAC CE and/or the DCI signaling scheduling the SRS resource include the MAC CE and/or the DCI signaling scheduling the SRS resource set where the SRS resource is located.

In some implementations, the power control adjustment state index is determined based on the order of the SRS resource in the SRS resource set, or based on the ID of the SRS resource.

The details and examples of this example are similar to Example 1, replacing the "SRS resource set" with the "SRS resource", and replacing the "SRS-ResourceSet" with the "SRS-Resource".

### Example 3

The power control adjustment state is determined based on the first TCI state; and the transmission power of the SRS transmission is determined based on the power control adjustment state.

Determining the power control adjustment state based on the first TCI state includes:
determining the power control adjustment state based on the power control adjustment state index associated with the first TCI state. In some implementations, the power control adjustment state is the SRS power control adjustment state whose index is the power control adjustment state index, or, the power control adjustment state is the PUSCH power control adjustment state whose index is the power control adjustment state index.

Alt 1: the base station indicates the association relationship between the first TCI state and the power control adjustment state index. For example:
indicating what the power control adjustment state index associated with the first TCI state is. For example, the first TCI state is configured with information indicating the power control adjustment state index, and the power control adjustment state corresponding to the SRS transmission is the power control adjustment state corresponding to the index. In some implementations, the first TCI state is configured with information indicating the power control adjustment state index, which is configured via one or more of the RRC signaling, the MAC-CE signaling, or the DCI signaling.

In some implementations, the index used to determine the power control adjustment state is the power control adjustment state index configured for the SRS in the uplink power control parameter corresponding to the first TCI state. For example, the index is the power control adjustment state index closedLoopIndex configured in p0AlphaSetforSRS in the Uplink-powerControl corresponding to the first TCI state.

In some implementations, the index used to determine the power control adjustment state is the power control adjustment state index configured for PUSCH or PUCCH in the uplink power control parameter corresponding to the first TCI state. For example, the index is the power control adjustment state index closedLoopIndex configured in p0AlphaSetforPUSCH/p0AlphaSetforPUCCH in the Uplink-powerControl corresponding to the first TCI state.

Alt 2: the base station and the terminal pre-agree on the association relationship between the first TCI state and the power control adjustment state index. For example, the power control adjustment state index is determined based on the order of the first TCI state among all TCI states in unified TCI (i.e., common TCI). For example, if the first TCI state is a first TCI state in order, the power control adjustment state index l=0; and if the first TCI state is a second TCI state in order, the power control adjustment state index l=1.

In some implementations, the power control adjustment state index associated with the first TCI state is the SRS power control adjustment state index associated with the first TCI state.

In some implementations, the power control adjustment state index associated with the first TCI state is the PUSCH power control adjustment state index associated with the first TCI state.

In some implementations, the first TCI state includes one of the following.
(1) a TCI state corresponding to the SRS transmission.

The TCI state corresponding to the SRS transmission may include:
the TCI state configured for the SRS resource/the SRS resource set using the RRC signaling; where the SRS resource set includes the SRS resource, and the SRS transmission is the SRS transmission performed based on the SRS resource.

Manner 1: directly configure the TCI state in the configuration information of the SRS resource/the SRS resource set.

Manner 2: indicate an index in the configuration information of the SRS resource/the SRS resource set, where the index has an association relationship with the TCI state. For example, an index value of 0 indicates one TCI state, and an index value of 1 indicates another TCI state. The TCI state corresponding to values may be configured by the RRC signaling, or, derived based on one or more of the RRC signaling, the MAC-CE signaling, or the DCI signaling. The TCI state associated with the index may be one or more of currently active unified TCIs.

(2) a TCI state associated with the CORESET where the DCI triggering the SRS transmission is located.

For example, the TCI state is a TCI state of the CORESET where the DCI triggering the SRS transmission is located.

(3) a TCI state associated with the PUSCH resource, where the PUSCH resource is associated with the SRS resource on which the SRS transmission is based.

The PUSCH resource may be a PUSCH transmitted based on the SRS resource. For example, one or more of the precoding information, the information of the number of layers, or the beam information of the PUSCH are determined based on the SRS resource.

(4) a TCI state associated with a target SRS resource, the target SRS resource being one of the following:
an SRS resource with a lowest identifier (ID) in an SRS resource set where an SRS resource corresponding to the SRS transmission is located;
an SRS resource with a highest ID in the SRS resource set where the SRS resource corresponding to the SRS transmission is located;
an SRS resource indicated by a network device in the SRS resource set where the SRS resource corresponding to the SRS transmission is located;
an SRS resource with a smallest sequence number in the SRS resource set where the SRS resource corresponding to the SRS transmission is located; or,
an SRS resource with a largest sequence number in the SRS resource set where the SRS resource corresponding to the SRS transmission is located.

### Example 4: (Example 4 is similar to Example 3, replacing the "TCI state" with the "spatial relation information".)

The power control adjustment state is determined based on the spatial relation information corresponding to the SRS transmission; and the transmission power of the SRS transmission is determined based on the power control adjustment state.

In some implementations, the power control adjustment state is determined based on the power control adjustment state index associated with the spatial relation information.

In some implementations, the power control adjustment state is the SRS power control adjustment state whose index is the power control adjustment state index.

In some implementations, the power control adjustment state is the PUSCH power control adjustment state whose index is the power control adjustment state index.

Alt 1: the base station indicates the association relationship between the spatial relation information and the power control adjustment state index. For example:
indicating what the power control adjustment state index associated with the spatial relation information is. For example, the spatial relation information is configured with information indicating the power control adjustment state index, and the power control adjustment state corresponding to the SRS transmission is the power control adjustment state corresponding to the index. In some implementations, the spatial relation information is configured with information indicating the power control adjustment state index, which is configured via one or more of the RRC signaling, the MAC-CE signaling, or the DCI signaling.

Alt 2: the base station and the terminal pre-agree on the association relationship between the spatial relation information and the power control adjustment state index.

In some implementations, the power control adjustment state index associated with the spatial relation information is the SRS power control adjustment state index associated with the spatial relation information.

In some implementations, the power control adjustment state index associated with the spatial relation information is the PUSCH power control adjustment state index associated with the spatial relation information.

In some implementations, the spatial relation information includes one of the following.
(1) spatial relation information corresponding to the SRS transmission.

The spatial relation information corresponding to the SRS transmission may include:
the spatial relation information configured for the SRS resource/the SRS resource set using the RRC signaling; where the SRS resource set includes the SRS resource, and the SRS transmission is the SRS transmission performed based on the SRS resource.

Manner 1: directly configure the spatial relation information in the configuration information of the SRS resource/the SRS resource set.

Manner 2: indicate an index in the configuration information of the SRS resource/the SRS resource set, where the index has an association relationship with the spatial relation information.

(2) spatial relation information associated with the CORESET where the DCI triggering the SRS transmission is located.

(3) spatial relation information associated with the PUSCH resource, where the PUSCH resource is associated with the SRS resource on which the SRS transmission is based.

### Example 5

The power control adjustment state is determined based on the CORESETPoolIndex; and the transmission power of the SRS transmission is determined based on the power control adjustment state.

In some implementations, determining the power control adjustment state based on the CORESETPoolIndex includes: determining the power control adjustment state based on the power control adjustment state index associated with the CORESETPoolIndex.

In some implementations, the power control adjustment state is the SRS power control adjustment state whose index is the power control adjustment state index.

In some implementations, the power control adjustment state is the PUSCH power control adjustment state whose index is the power control adjustment state index.

Specifically, the CORESETPoolIndex has an association relationship with the power control adjustment state index, and the power control adjustment state corresponding to the SRS transmission is determined based on the association relationship.

In some implementations, the first SRS resource/the first SRS resource set has an association relationship with the CORESETPoolIndex, and the CORESETPoolIndex corresponding to the SRS transmission is determined based on the association relationship. The association relationship between the first SRS resource/the first SRS resource set and the CORESETPoolIndex may be configured by the base station. For example, the association relationship is configured in the configuration information of the first SRS resource, or configured in the configuration information of the SRS resource set where the first SRS resource is located. The first SRS resource is the SRS resource on which the SRS transmission is based. The first SRS resource set is the SRS resource set where the SRS resource on which the SRS transmission is based is located.

In some implementations, the CORESETPoolIndex is the CORESETPoolIndex corresponding to the CORESET where the DCI scheduling the SRS transmission is located.

In some implementations, the CORESETPoolIndex is the CORESETPoolIndex corresponding to the PUSCH resource corresponding to the first SRS resource. The PUSCH resource corresponding to the first SRS resource is a PUSCH resource that may be transmitted based on the first SRS resource; or, the PUSCH resource is a PUSCH transmitted based on the first SRS resource. For example, one or more of the precoding information, the information of the number of layers, or the beam information of the PUSCH are determined based on the first SRS resource.

### Example 6

The power control adjustment state is determined based on the SRI; and the transmission power of the SRS transmission is determined based on the power control adjustment state.

In some implementations, the SRI is an SRI used to indicate the SRS resource corresponding to the SRS transmission.

In some implementations, the SRI is used to indicate the SRS resource corresponding to the PUSCH transmission.

In some implementations, the SRI is associated with a power control adjustment state index, and the power control adjustment state is: the SRS power control adjustment state whose index is the power control adjustment state index.

In some implementations, the power control adjustment state is: the PUSCH power control adjustment state whose index is the power control adjustment state index.

### Example 7

The power control adjustment state index of the SRS is determined based on the power control adjustment state index of the PUSCH, the SRS power control adjustment state is determined based on the power control adjustment state index of the SRS, and the transmission power of the SRS is determined based on the SRS power control adjustment state.

In some implementations, the power control adjustment state index of the SRS is equal to the power control adjustment state index of the PUSCH; and the power control adjustment state corresponding to the SRS transmission is: the SRS power control adjustment state whose index is the power control adjustment state index of the PUSCH associated with the SRS.

In some implementations, the PUSCH is a PUSCH associated with the SRS transmission. For example, one or more of the precoding matrix, the number of layers, or the beam information (spatial relation information) of the PUSCH are determined based on the SRS.

In some implementations, the PUSCH is a PUSCH transmitted based on the first SRS resource. For example, one or more of the precoding information, the information of the number of layers, or the beam information of the PUSCH are determined based on the first SRS resource. The first SRS resource is the SRS resource on which the SRS transmission is based, i.e., the SRS transmission is an SRS transmission performed based on the first SRS resource; or, the first SRS resource is an SRS resource in the SRS resource set where the SRS resource on which the SRS transmission is based is located.

In some implementations, the PUSCH is a PUSCH transmitted based on the first SRS resource set. For example, one or more of the precoding information, the information of the number of layers, or the beam information of the PUSCH are determined based on the SRS resources in the first SRS resource set. The first SRS resource set is the SRS resource set where the SRS resource on which the SRS transmission is based is located.

In some implementations, the PUSCH is a PUSCH whose transmission time overlaps with the SRS transmission. For example, the SRS transmission is on symbols 10 to 14 of a time slot, if a PUSCH transmission is on symbols 0 to 11 of that time slot, and its power control adjustment state index is 0, then the UE determines that the power control adjustment state index of the SRS is 0, thereby further determining the SRS power control adjustment state.

In some implementations, the PUSCH is the PUSCH, before the SRS transmission, that is closest to the SRS (i.e., a most recently transmitted PUSCH). As shown in FIG. 3, the PUSCH closest to the SRS transmission is PUSCH 2. If the power control adjustment state associated with the PUSCH is 1, then the SRS power control adjustment state is the SRS power control adjustment state with index 1, or the PUSCH power control adjustment state with index 1.

In some implementations, the PUSCH is the PUSCH whose transmission time is closest to the SRS. Still as shown in FIG. 3, the PUSCH closest to the SRS transmission is PUSCH 3. If the power control adjustment state associated with the PUSCH is 1, then the SRS power control adjustment state is: the SRS power control adjustment state whose index is the same as the power control adjustment state index of PUSCH 3, or the SRS power control adjustment state is: the PUSCH power control adjustment state whose index is the same as the index of PUSCH 3.

Example 8: (Example 8 is similar to Example 7, the difference therebetween being that the SRS power control adjustment state is the same as the PUSCH power control adjustment state.)

The SRS power control adjustment state is determined based on the power control adjustment state index corresponding to one of the following PUSCHs.
(1) the PUSCH associated with the SRS transmission.
(2) the PUSCH transmitted based on the first SRS resource. For example, one or more of the precoding information, the information of the number of layers, or the beam information of the PUSCH are determined based on the first SRS resource. The first SRS resource is the SRS resource on which the SRS transmission is based, i.e., the SRS transmission is the SRS transmission performed based on the first SRS resource; or, the first SRS resource is the SRS resource in the SRS resource set where the SRS resource on which the SRS transmission is based is located.
(3) the PUSCH transmitted based on the first SRS resource set. For example, one or more of the precoding information, the information of the number of layers, or the beam information of the PUSCH are determined based on the SRS resources in the first SRS resource set. The first SRS resource set is the SRS resource set where the SRS resource on which the SRS transmission is based is located.
(4) the PUSCH whose transmission time overlaps with the SRS transmission. For example, the SRS transmission is on symbols 10 to 14 of a time slot. If a PUSCH transmission is on symbols 0 to 11 of that time slot, and its power control adjustment state index is 0, then the UE determines that the power control adjustment state index of the SRS is 0, thereby further determining the SRS power control adjustment state.
(5) the PUSCH, before the SRS transmission, that is closest to the SRS (i.e., the most recently transmitted PUSCH). As shown in FIG. 1, the PUSCH closest to the SRS transmission is PUSCH 2. If the power control adjustment state associated with the PUSCH is 1, then the SRS power control adjustment state is the SRS power control adjustment state with index 1, or the PUSCH power control adjustment state with index 1.
(6) the PUSCH whose transmission time is closest to the SRS.

In some implementations, the SRS power control adjustment state is: the PUSCH power control adjustment state whose index is the power control adjustment state index of the PUSCH.

For the above methods, in some embodiments, the UE may maintain multiple SRS power control adjustment states, each SRS power control adjustment state corresponds to one power control adjustment state index, and the SRS power control adjustment state corresponding to one power control adjustment state index may be a cumulative value or a non-cumulative value.

The methods and the apparatuses provided by various embodiments of the present disclosure are based on the same application concept. Since the methods and the apparatuses have similar principles for solving problems, the implementation of the apparatuses and the implementation of the methods may be referred to each other, and redundant descriptions are not elaborated.

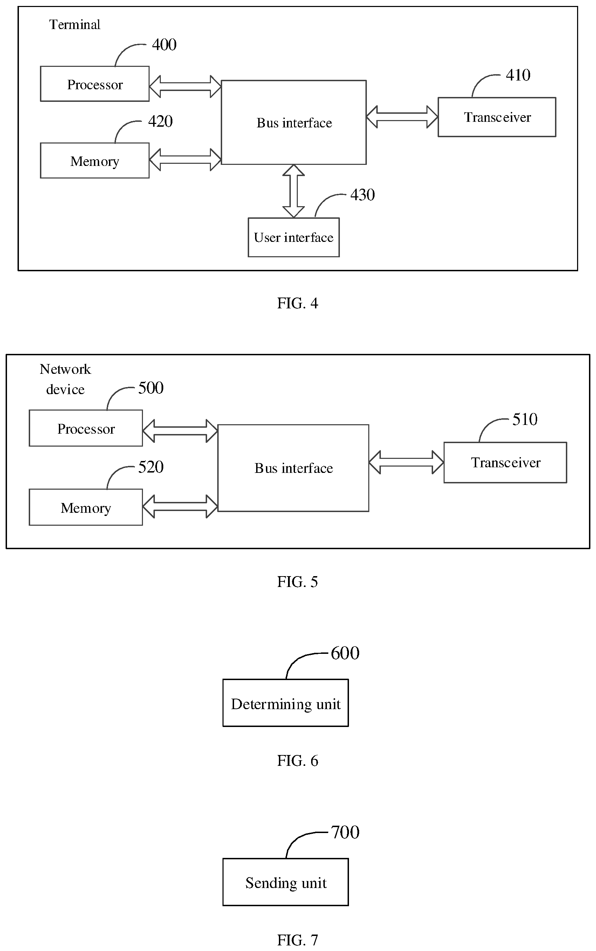

FIG. 4 is a schematic structural diagram of a terminal provided by an embodiment of the present disclosure. As shown in FIG. 4, the terminal includes a memory 420, a transceiver 410, and a processor 400; where the processor 400 and the memory 420 may also be physically separated.

The memory 420 is configured to store computer programs; and the transceiver 410 is configured to send and receive data under a control of the processor 400.

Specifically, the transceiver 410 is configured to receive and send the data under the control of the processor 400.

In FIG. 4, a bus architecture may include any number of interconnected buses and bridges, specifically, various circuits of one or more processors represented by the processor 400 and a memory represented by the memory 420 are linked together. The bus architecture may also link together various other circuits such as peripherals, voltage regulators, and power management circuits, which are well known in the art, and therefore, the present disclosure will not further describe them. The bus interface provides an interface. The transceiver 410 may be multiple elements, i.e., including a transmitter and a receiver and providing units for communicating with various other apparatuses on transmission media, where these transmission media include a wireless channel, a wired channel, an optical cable, and other transmission media. For different user equipment, a user interface 430 may also be an interface can connect externally or internally to required devices, and the connected devices include but are not limited to a keypad, a display, a speaker, a microphone, a joystick, etc.

The processor 400 is responsible for managing the bus architecture and general processing, and the memory 420 may store data used by the processor 400 when performing operations.

The processor 400 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The processor 400, by calling the computer programs stored in the memory 420, is configured to execute any of the methods provided by the embodiments of the present disclosure in accordance with the obtained executable instructions, for example, determining, based on first information, a power control adjustment state corresponding to a sounding reference signal (SRS) transmission, where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the determining, based on the first information, the power control adjustment state corresponding to the SRS transmission includes:
determining a power control adjustment state index corresponding to the first information;
determining, based on the power control adjustment state index corresponding to the first information, the power control adjustment state corresponding to the SRS transmission.

In some embodiments, in a case that the first information includes the first PUSCH, the determining, based on the first information, the power control adjustment state corresponding to the SRS transmission includes:
determining, based on the first PUSCH power control adjustment state, the power control adjustment state corresponding to the SRS transmission.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the determining the power control adjustment state index corresponding to the first information includes:
determining the power control adjustment state index corresponding to the first information based on one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI; or,
a protocol predefined rule.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the method further includes:
receiving first configuration information sent by a network device, where the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

FIG. 5 is a schematic structural diagram of a network device provided by an embodiment of the present disclosure. As shown in FIG. 5, the network device includes a memory 520, a transceiver 510, and a processor 500; where the processor 500 and the memory 520 may also be physically separated.

The memory 520 is configured to store computer programs; and the transceiver 510 is configured to receive and send data under a control of the processor 500.

Specifically, the transceiver 510 is configured to receive and send the data under the control of the processor 500.

In FIG. 5, a bus architecture may include any number of interconnected buses and bridges, specifically, various circuits of one or more processors represented by the processor 500 and memory represented by the memory 520 are linked together. The bus architecture may also link together various other circuits such as peripherals, voltage regulators, and power management circuits, which are well known in the art, and therefore, the present disclosure will not further describe them. The bus interface provides an interface. The transceiver 510 may be multiple elements, i.e., including a transmitter and a receiver and providing units for communicating with various other apparatuses on transmission media, where these transmission media include a wireless channel, a wired channel, an optical cable, and other transmission media.

The processor 500 is responsible for managing the bus architecture and general processing, and the memory 520 may store data used by the processor 500 when performing operations.

The processor 500 may be a CPU, an ASIC, an FPGA, or a CPLD. The processor may also adopt a multi-core architecture.

The processor 500, by calling the computer programs stored in the memory 520, is configured to execute any of the methods provided by the embodiments of the present disclosure in accordance with the obtained executable instructions, for example, sending second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the power control adjustment state corresponding to the SRS transmission is determined based on the power control adjustment state index corresponding to the first information.

In some embodiments, in a case that the first information includes the first PUSCH, the power control adjustment state corresponding to the SRS transmission is determined based on the first PUSCH power control adjustment state.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the second information includes one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the second information includes first configuration information, and the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

It should be noted here that the above terminal and network device provided by the embodiments of the present disclosure can implement all the method steps implemented by the above method embodiments, and can achieve the technical effects which are the same as those of the method embodiments. The parts and beneficial effects, in this embodiment, that are the same as those of the method embodiments will not be specifically repeated here.

FIG. 6 is a first schematic structural diagram of an apparatus for determining a power control adjustment state provided by an embodiment of the present disclosure. As shown in FIG. 6, the apparatus includes:
a determining unit 600, configured to determine, based on first information, a power control adjustment state corresponding to a sounding reference signal (SRS) transmission;
where the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the determining, based on the first information, the power control adjustment state corresponding to the SRS transmission includes:
determining a power control adjustment state index corresponding to the first information;
determining, based on the power control adjustment state index corresponding to the first information, the power control adjustment state corresponding to the SRS transmission.

In some embodiments, in a case that the first information includes the first PUSCH, the determining, based on the first information, the power control adjustment state corresponding to the SRS transmission includes:
determining, based on a first PUSCH power control adjustment state, the power control adjustment state corresponding to the SRS transmission.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the determining the power control adjustment state index corresponding to the first information includes:
determining the power control adjustment state index corresponding to the first information based on one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI; or,
a protocol predefined rule.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the apparatus further includes:
a receiving unit, configured to receive first configuration information sent by a network device, where the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

FIG. 7 is a second schematic structural diagram of an apparatus for determining a power control adjustment state provided by an embodiment of the present disclosure. As shown in FIG. 7, the apparatus includes:
a sending unit 700, configured to send second information to a terminal, where the second information is used to determine first information or a power control adjustment state index corresponding to the first information, the first information is used to determine a power control adjustment state corresponding to a sounding reference signal (SRS) transmission, and the first information includes one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

In some embodiments, the power control adjustment state corresponding to the SRS transmission is determined based on the power control adjustment state index corresponding to the first information.

In some embodiments, in a case that the first information includes the first PUSCH, the power control adjustment state corresponding to the SRS transmission is determined based on the first PUSCH power control adjustment state.

In some embodiments, the related information of the first SRS resource includes one or more of the following:
information used to indicate a power control adjustment state index corresponding to the first SRS resource; or,
an order of the first SRS resource in an SRS resource set; or,
an identifier of the first SRS resource.

In some embodiments, the first SRS resource is an SRS resource corresponding to the SRS transmission.

In some embodiments, the related information of the first SRS resource set includes one or more of the following:
information used to indicate a power control adjustment state index corresponding to the first SRS resource set; or,
an order of the first SRS resource set in an SRS resource set list; or,
an identifier of the first SRS resource set.

In some embodiments, the first SRS resource set is an SRS resource set corresponding to the SRS transmission.

In some embodiments, the first TCI state includes one or more of the following:
a TCI state corresponding to the SRS transmission; or,
a TCI state associated with a control resource set (CORESET) where first downlink control information (DCI) is located, where the first DCI is DCI that triggers the SRS transmission; or,
a TCI state associated with a PUSCH, where the PUSCH is associated with an SRS resource corresponding to the SRS transmission; or,
a TCI state associated with a target SRS resource, where the target SRS resource is one of the following:
   an SRS resource with a lowest identifier (ID) in an SRS resource set where an SRS resource corresponding to the SRS transmission is located;
   an SRS resource with a highest ID in the SRS resource set where the SRS resource corresponding to the SRS transmission is located;
   an SRS resource indicated by a network device in the SRS resource set where the SRS resource corresponding to the SRS transmission is located;
   an SRS resource with a smallest sequence number in the SRS resource set where the SRS resource corresponding to the SRS transmission is located; or,
   an SRS resource with a largest sequence number in the SRS resource set where the SRS resource corresponding to the SRS transmission is located.

In some embodiments, the first spatial relation information includes one or more of the following:
spatial relation information corresponding to the SRS transmission; or,
spatial relation information associated with a CORESET where first DCI is located, where the first DCI is DCI that triggers the SRS transmission; or,
spatial relation information associated with the PUSCH, where the PUSCH is associated with an SRS resource corresponding to the SRS transmission.

In some embodiments, the first control resource pool index includes one or more of the following:
a control resource pool index corresponding to the SRS transmission; or,
a control resource pool index corresponding to a CORESET where first DCI is located, where the first DCI is DCI that triggers the SRS transmission; or,
a control resource pool index corresponding to a PUSCH associated with an SRS resource corresponding to the SRS transmission.

In some embodiments, the first SRI includes one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

In some embodiments, the first PUSCH includes one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
where the SRS resource set corresponding to the SRS transmission is: the SRS resource set where the SRS resource corresponding to the SRS transmission is located.

In some embodiments, the second information includes one or more of the following:
configuration information of the first SRS resource, where the configuration information of the first SRS resource includes information used to indicate the power control adjustment state index corresponding to the first SRS resource; or,
configuration information of an SRS resource set where the first SRS resource is located, where the configuration information of the SRS resource set where the first SRS resource is located includes information used to indicate the power control adjustment state index corresponding to the first SRS resource; or,
scheduling signaling for the first SRS resource, where the scheduling signaling for the first SRS resource includes information used to indicate the power control adjustment state index corresponding to the first SRS resource; or,
scheduling signaling for the SRS resource set where the first SRS resource is located, where the scheduling signaling for the SRS resource set where the first SRS resource is located includes information used to indicate the power control adjustment state index corresponding to the first SRS resource; or,
configuration information of the first SRS resource set, where the configuration information of the first SRS resource set includes information used to indicate the power control adjustment state index corresponding to the first SRS resource set; or,
scheduling signaling for the first SRS resource set, where the scheduling signaling for the first SRS resource set includes information used to indicate the power control adjustment state index corresponding to the first SRS resource set; or,
configuration information of the first TCI state, where the configuration information of the first TCI state includes information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, where the configuration information of the first spatial relation information includes information used to indicate the power control adjustment state index corresponding to the first spatial relation information; or,
information used to indicate the power control adjustment state index corresponding to the first control resource pool index; or,
information used to indicate the power control adjustment state index corresponding to the first SRI.

In some embodiments, the power control adjustment state index corresponding to the first information is: an SRS power control adjustment state index or a PUSCH power control adjustment state index.

In some embodiments, the power control adjustment state corresponding to the SRS transmission includes: an SRS power control adjustment state corresponding to the power control adjustment state index corresponding to the first information, or a PUSCH power control adjustment state corresponding to the power control adjustment state index corresponding to the first information.

In some embodiments, the second information includes first configuration information, and the first configuration information includes one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
where the first configuration information includes: configuration information of an SRS resource corresponding to the SRS transmission, or configuration information of an SRS resource set corresponding to the SRS transmission.

It should be noted that the division of units in the embodiments of the present disclosure is merely illustrative and is only a logical function division, and there may be other divisions in actual implementation. In addition, each of the functional units in each of the embodiments of the present disclosure may be integrated into one processing unit, or each unit may be physically independent, or two or more units may be integrated into one unit. The above integrated unit may be implemented in the form of hardware or in the form of software functional units.

If the integrated unit is implemented in the form of software functional units and sold or used as an independent product, it can be stored in a processor-readable storage medium. Based on this understanding, the technical solution of the present disclosure may be essentially or the part thereof that contributes to the prior art or all or part of the technical solution may be embodied in the form of a software product. The computer software product is stored in a storage medium, including several instructions for a computer device (which may be a personal computer, a server, or a network device, etc.) or a processor (processor) to execute all or part of the steps of the method described in each of the embodiments of the present disclosure. The aforementioned storage medium includes: a USB flash drive, a mobile hard disk, a read-only memory (Read-Only Memory, ROM), a random access memory (Random Access Memory, RAM), a magnetic disk or an optical disk or other kinds of media capable of storing program codes.

It should be noted here that the above apparatus provided by the embodiments of the present disclosure can implement all the method steps implemented by the above method embodiments, and can achieve the technical effects which are the same as those of the method embodiments. The parts and beneficial effects, in this embodiment, that are the same as those of the method embodiments will not be specifically repeated here.

On the other hand, an embodiment of the present disclosure further provides a non-transitory readable storage medium having computer programs stored therein, where the computer programs are used to cause a processor to execute the method for determining the power control adjustment state provided by the above embodiments.

It should be noted here that the non-transitory readable storage medium provided by the embodiment of the present disclosure can implement all the method steps implemented by the above method embodiments, and can achieve the technical effects which are the same as those of the method embodiments. The parts and beneficial effects, in this embodiment, that are the same as those of the method embodiments will not be specifically repeated here.

The non-transitory readable storage medium may be any available medium or data storage device that can be accessed by a computer, including but not limited to a magnetic memory (for example, a floppy disk, a hard disk, a magnetic tape, a magneto-optical disk (MO), etc.), an optical memory (for example, a CD, a DVD, a BD, a HVD, etc.), and a semiconductor memory (for example, a ROM, an EPROM, an EEPROM, a nonvolatile memory (NAND FLASH), a solid-state drive (SSD)), etc.

The technical solutions provided by the embodiments of the present disclosure can be applied to various systems, especially a 5G system or a 5G Advanced system. For example, applicable systems may be a global system of mobile communication (global system of mobile communication, GSM) system, a code division multiple access (code division multiple access, CDMA) system, a wideband code division multiple access (Wideband Code Division Multiple Access, WCDMA), a general packet radio service (general packet radio service, GPRS) system, a long term evolution (long term evolution, LTE) system, a LTE frequency division duplex (frequency division duplex, FDD) system, a LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These various systems all include the terminal device and the network device. The system may also include a core network part, such as an evolved packet system (Evolved Packet System, EPS), a 5G system (5GS), a 6G system, etc.

The terminal involved in the embodiments of the present disclosure may be a device that provides voice and/or data connectivity to a user, a handheld device with a wireless connection function, other processing devices connected to a wireless modem, etc. In different systems, the name of the terminal may also be different. For example, in a 5G system, the terminal may be called user equipment (User Equipment, UE). A wireless terminal device may communicate with one or more core networks (Core Network, CN) via a radio access network (Radio Access Network, RAN). The wireless terminal device may be a mobile terminal device, such as a mobile phone (or called a "cellular" phone) and a computer with a mobile terminal device, for example, it may be a portable, a pocket-sized, a handheld, a computer-built-in, or a vehicle-mounted mobile apparatus, they exchange language and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) device, etc. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user apparatus (user device), which are not limited in the embodiments of the present disclosure.

The network device involved in the embodiments of the present disclosure may be a base station, where the base station may include a plurality of cells providing services for the terminal. Depending on a specific application occasion, the base station may also be referred as an access point, or may be a device in an access network that communicates with the wireless terminal through one or more sectors on an air interface, or other names. The network device may be used to exchange received air frames with internet protocol (Internet Protocol, IP) packets, and act as a router between the wireless terminal and the rest parts of the access network, where the rest parts of the access network may include the internet protocol (IP) communication network. The network devices may also coordinate attribute management for the air interface. For example, the network device involved in the embodiments of the present disclosure may be a network device (Base Transceiver Station, BTS) in a global system for mobile communication (Global System for Mobile Communication, GSM) or a code division multiple access (Code Division Multiple Access, CDMA), or may be a network device (NodeB) in a wide-band code division multiple access (Wide-band Code Division Multiple Access, WCDMA), or may be an evolved network device (evolutional Node B, eNB or e-NodeB) in a long term evolution (long term evolution, LTE) system, a 5G base station (gNB) in a 5G network architecture (next generation system), also may be a home evolved Node B (Home evolved Node B, HeNB), a relay node (relay node), a home base station (femto), a pico base station (pico), etc., which are not limited in the embodiments of the present disclosure. In some network structures, the network device may include centralized unit (centralized unit, CU) nodes and distributed unit (distributed unit, DU) nodes, and the centralized unit and the distributed unit may also be geographically separated.

One or more antennas may be used between the network device and the terminal to perform multi input multi output (Multi Input Multi Output, MIMO) transmission, the MIMO transmission may be a single user MIMO (Single User MIMO, SU-MIMO) or a multiple user MIMO (Multiple User MIMO, MU-MIMO). According to a form and the number of antenna combinations, the MIMO transmission may be a 2D-MIMO, a 3D-MIMO, a FD-MIMO, or a massive MIMO, or may be a diversity transmission, a precoding transmission, or a beamforming transmission.

Those skilled in the art should understand that embodiments of the present disclosure can be provided as methods, systems, or computer program products. Therefore, the present disclosure may take the form of a complete hardware embodiment, a complete software embodiment, or an embodiment combining software and hardware aspects. Furthermore, the present disclosure may take the form of a computer program product implemented on one or more computer usable storage media (including but not limited to a disk memory, an optical memory, etc.) containing computer usable program codes.

The present disclosure is described with reference to a flowchart and/or a block diagram of the method, the device (system), and the computer program product according to embodiments of the present disclosure. It will be understood that each flow and/or block in the flowchart and/or the block diagram, and a combination of the flow and/or the block in the flowchart and/or the block diagram can be realized by computer executable instructions. These computer executable instructions may be provided to a processor of a general purpose computer, a special purpose computer, an embedded processor or other programmable data processing devices to generate a machine such that instructions executed by a processor of a computer or other programmable data processing devices generate devices for implementing functions specified in one or more flows in the flowchart and/or one or more blocks in the block diagram.

These processor executable instructions may also be stored in a processor readable memory that can guide the computer or other programmable data processing devices to work in a specific way, so that the instructions stored in the processor readable memory generate a manufacture including an instruction apparatus, and the instruction apparatus implements the functions specified in one or more flows in the flowchart and/or one or more blocks in the block diagram.

These processor executable instructions may also be loaded onto the computer or other programmable data processing devices to enable a series of operating steps to be executed on the computer or other programmable devices to generate a computer implemented process, so that instructions executed on the computer or other programmable devices provide steps for implementing the functions specified in one or more flows in the flowchart and/or one or more blocks in the block diagram.

Obviously, those skilled in the art can make various modifications and variations to the present disclosure without departing from the spirit and scope of the present disclosure. In this way, if these modifications and variations of the present disclosure fall within the scope of the claims and their equivalent technologies of the present disclosure, the present disclosure is also intended to include these modifications and variations.

## Claims

1. A method for determining a power control adjustment state, applied to a terminal, comprising:
determining, based on first information, a power control adjustment state corresponding to a sounding reference signal (SRS) transmission;
wherein the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

2. The method for determining the power control adjustment state according to claim 1, wherein the determining, based on the first information, the power control adjustment state corresponding to the SRS transmission comprises:
determining a power control adjustment state index corresponding to the first information;
determining, based on the power control adjustment state index corresponding to the first information, the power control adjustment state corresponding to the SRS transmission.

3. The method for determining the power control adjustment state according to claim 1, wherein, in a case that the first information comprises the first PUSCH, the determining, based on the first information, the power control adjustment state corresponding to the SRS transmission comprises:
determining, based on a first PUSCH power control adjustment state, the power control adjustment state corresponding to the SRS transmission.

4. The method for determining the power control adjustment state according to claim 1 or 2, wherein the related information of the first SRS resource comprises one or more of the following:
information used to indicate a power control adjustment state index corresponding to the first SRS resource; or,
an order of the first SRS resource in an SRS resource set; or,
an identifier of the first SRS resource.

5. The method for determining the power control adjustment state according to claim 1 or 2, wherein the first SRS resource is an SRS resource corresponding to the SRS transmission.

6. The method for determining the power control adjustment state according to claim 1 or 2, wherein the related information of the first SRS resource set comprises one or more of the following:
information used to indicate a power control adjustment state index corresponding to the first SRS resource set; or,
an order of the first SRS resource set in an SRS resource set list; or,
an identifier of the first SRS resource set.

7. The method for determining the power control adjustment state according to claim 1 or 2, wherein the first SRS resource set is an SRS resource set corresponding to the SRS transmission.

8. The method for determining the power control adjustment state according to claim 1 or 2, wherein the first TCI state comprises one or more of the following:
a TCI state corresponding to the SRS transmission; or,
a TCI state associated with a control resource set (CORESET) where first downlink control information (DCI) is located, wherein the first DCI is DCI that triggers the SRS transmission; or,
a TCI state associated with a PUSCH, wherein the PUSCH is associated with an SRS resource corresponding to the SRS transmission; or,
a TCI state associated with a target SRS resource, wherein the target SRS resource is one of the following:
an SRS resource with a lowest identifier (ID) in an SRS resource set where an SRS resource corresponding to the SRS transmission is located;
an SRS resource with a highest ID in the SRS resource set where the SRS resource corresponding to the SRS transmission is located;
an SRS resource indicated by a network device in the SRS resource set where the SRS resource corresponding to the SRS transmission is located;
an SRS resource with a smallest sequence number in the SRS resource set where the SRS resource corresponding to the SRS transmission is located; or,
an SRS resource with a largest sequence number in the SRS resource set where the SRS resource corresponding to the SRS transmission is located.

9. The method for determining the power control adjustment state according to claim 1 or 2, wherein the first spatial relation information comprises one or more of the following:
spatial relation information corresponding to the SRS transmission; or,
spatial relation information associated with a CORESET where first DCI is located, wherein the first DCI is DCI that triggers the SRS transmission; or,
spatial relation information associated with the PUSCH, wherein the PUSCH is associated with an SRS resource corresponding to the SRS transmission.

10. The method for determining the power control adjustment state according to claim 1 or 2, wherein the first control resource pool index comprises one or more of the following:
a control resource pool index corresponding to the SRS transmission; or,
a control resource pool index corresponding to a CORESET where first DCI is located, wherein the first DCI is DCI that triggers the SRS transmission; or,
a control resource pool index corresponding to a PUSCH associated with an SRS resource corresponding to the SRS transmission.

11. The method for determining the power control adjustment state according to claim 1 or 2, wherein the first SRI comprises one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

12. The method for determining the power control adjustment state according to claim 1 or 2, wherein the first PUSCH comprises one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
wherein the SRS resource set corresponding to the SRS transmission is: the SRS resource set where the SRS resource corresponding to the SRS transmission is located.

13. The method for determining the power control adjustment state according to claim 2, wherein the determining the power control adjustment state index corresponding to the first information comprises:
determining the power control adjustment state index corresponding to the first information based on one or more of the following:
configuration information of the first SRS resource, wherein the configuration information of the first SRS resource comprises information used to indicate the power control adjustment state index corresponding to the first SRS resource; or,
configuration information of an SRS resource set where the first SRS resource is located, wherein the configuration information of the SRS resource set where the first SRS resource is located comprises information used to indicate the power control adjustment state index corresponding to the first SRS resource; or,
scheduling signaling for the first SRS resource, wherein the scheduling signaling for the first SRS resource comprises information used to indicate the power control adjustment state index corresponding to the first SRS resource; or,
scheduling signaling for the SRS resource set where the first SRS resource is located, wherein the scheduling signaling for the SRS resource set where the first SRS resource is located comprises information used to indicate the power control adjustment state index corresponding to the first SRS resource; or,
configuration information of the first SRS resource set, wherein the configuration information of the first SRS resource set comprises information used to indicate the power control adjustment state index corresponding to the first SRS resource set; or,
scheduling signaling for the first SRS resource set, wherein the scheduling signaling for the first SRS resource set comprises information used to indicate the power control adjustment state index corresponding to the first SRS resource set; or,
configuration information of the first TCI state, wherein the configuration information of the first TCI state comprises information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, wherein the configuration information of the first spatial relation information comprises information used to indicate the power control adjustment state index corresponding to the first spatial relation information; or,
information used to indicate the power control adjustment state index corresponding to the first control resource pool index; or,
information used to indicate the power control adjustment state index corresponding to the first SRI; or,
a protocol predefined rule.

14. The method for determining the power control adjustment state according to claim 2, wherein the power control adjustment state index corresponding to the first information is: an SRS power control adjustment state index or a PUSCH power control adjustment state index.

15. The method for determining the power control adjustment state according to claim 2 or 14, wherein the power control adjustment state corresponding to the SRS transmission comprises: an SRS power control adjustment state corresponding to the power control adjustment state index corresponding to the first information, or a PUSCH power control adjustment state corresponding to the power control adjustment state index corresponding to the first information.

16. The method for determining the power control adjustment state according to claim 1 or 2, wherein the method further comprises:
receiving first configuration information sent by a network device, wherein the first configuration information comprises one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
wherein the first configuration information comprises: configuration information of an SRS resource corresponding to the SRS transmission, or configuration information of an SRS resource set corresponding to the SRS transmission.

17. A method for determining a power control adjustment state, applied to a network device, comprising:
sending second information to a terminal, wherein the second information is used to determine first information or a power control adjustment state index corresponding to the first information, the first information is used to determine a power control adjustment state corresponding to a sounding reference signal (SRS) transmission, and the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

18. The method for determining the power control adjustment state according to claim 17, wherein the power control adjustment state corresponding to the SRS transmission is determined based on the power control adjustment state index corresponding to the first information.

19. The method for determining the power control adjustment state according to claim 17, wherein, in a case that the first information comprises the first PUSCH, the power control adjustment state corresponding to the SRS transmission is determined based on the first PUSCH power control adjustment state.

20. The method for determining the power control adjustment state according to claim 17 or 18, wherein the related information of the first SRS resource comprises one or more of the following:
information used to indicate a power control adjustment state index corresponding to the first SRS resource; or,
an order of the first SRS resource in an SRS resource set; or,
an identifier of the first SRS resource.

21. The method for determining the power control adjustment state according to claim 17 or 18, wherein the first SRS resource is an SRS resource corresponding to the SRS transmission.

22. The method for determining the power control adjustment state according to claim 17 or 18, wherein the related information of the first SRS resource set comprises one or more of the following:
information used to indicate a power control adjustment state index corresponding to the first SRS resource set; or,
an order of the first SRS resource set in an SRS resource set list; or,
an identifier of the first SRS resource set.

23. The method for determining the power control adjustment state according to claim 17 or 18, wherein the first SRS resource set is an SRS resource set corresponding to the SRS transmission.

24. The method for determining the power control adjustment state according to claim 17 or 18, wherein the first TCI state comprises one or more of the following:
a TCI state corresponding to the SRS transmission; or,
a TCI state associated with a control resource set (CORESET) where first downlink control information (DCI) is located, wherein the first DCI is DCI that triggers the SRS transmission; or,
a TCI state associated with a PUSCH, wherein the PUSCH is associated with an SRS resource corresponding to the SRS transmission; or,
a TCI state associated with a target SRS resource, wherein the target SRS resource is one of the following:
an SRS resource with a lowest identifier (ID) in an SRS resource set where an SRS resource corresponding to the SRS transmission is located;
an SRS resource with a highest ID in the SRS resource set where the SRS resource corresponding to the SRS transmission is located;
an SRS resource indicated by a network device in the SRS resource set where the SRS resource corresponding to the SRS transmission is located;
an SRS resource with a smallest sequence number in the SRS resource set where the SRS resource corresponding to the SRS transmission is located; or,
an SRS resource with a largest sequence number in the SRS resource set where the SRS resource corresponding to the SRS transmission is located.

25. The method for determining the power control adjustment state according to claim 17 or 18, wherein the first spatial relation information comprises one or more of the following:
spatial relation information corresponding to the SRS transmission; or,
spatial relation information associated with a CORESET where first DCI is located, wherein the first DCI is DCI that triggers the SRS transmission; or,
spatial relation information associated with the PUSCH, wherein the PUSCH is associated with an SRS resource corresponding to the SRS transmission.

26. The method for determining the power control adjustment state according to claim 17 or 18, wherein the first control resource pool index comprises one or more of the following:
a control resource pool index corresponding to the SRS transmission; or,
a control resource pool index corresponding to a CORESET where first DCI is located, wherein the first DCI is DCI that triggers the SRS transmission; or,
a control resource pool index corresponding to a PUSCH associated with an SRS resource corresponding to the SRS transmission.

27. The method for determining the power control adjustment state according to claim 17 or 18, wherein the first SRI comprises one or more of the following SRIs:
a second SRI, used to indicate: an SRS resource corresponding to the SRS transmission; or,
a third SRI, used to indicate: an SRS resource corresponding to the PUSCH associated with the SRS resource corresponding to the SRS transmission.

28. The method for determining the power control adjustment state according to claim 17 or 18, wherein the first PUSCH comprises one or more of the following:
a PUSCH associated with the SRS transmission; or,
a PUSCH transmitted based on SRS resources in an SRS resource set corresponding to the SRS transmission; or,
a PUSCH transmitted based on the SRS resource set corresponding to the SRS transmission; or,
a PUSCH whose transmission time domain position overlaps with the SRS transmission; or,
a PUSCH, before the SRS transmission, that is closest to the SRS transmission; or,
a PUSCH, after the SRS transmission, that is closest to the SRS transmission; or,
a PUSCH whose time interval from the SRS transmission is less than a preset value;
wherein the SRS resource set corresponding to the SRS transmission is: the SRS resource set where the SRS resource corresponding to the SRS transmission is located.

29. The method for determining the power control adjustment state according to claim 17, wherein the second information comprises one or more of the following:
configuration information of the first SRS resource, wherein the configuration information of the first SRS resource comprises information used to indicate the power control adjustment state index corresponding to the first SRS resource; or,
configuration information of an SRS resource set where the first SRS resource is located, wherein the configuration information of the SRS resource set where the first SRS resource is located comprises information used to indicate the power control adjustment state index corresponding to the first SRS resource; or,
scheduling signaling for the first SRS resource, wherein the scheduling signaling for the first SRS resource comprises information used to indicate the power control adjustment state index corresponding to the first SRS resource; or,
scheduling signaling for the SRS resource set where the first SRS resource is located, wherein the scheduling signaling for the SRS resource set where the first SRS resource is located comprises information used to indicate the power control adjustment state index corresponding to the first SRS resource; or,
configuration information of the first SRS resource set, wherein the configuration information of the first SRS resource set comprises information used to indicate the power control adjustment state index corresponding to the first SRS resource set; or,
scheduling signaling for the first SRS resource set, wherein the scheduling signaling for the first SRS resource set comprises information used to indicate the power control adjustment state index corresponding to the first SRS resource set; or,
configuration information of the first TCI state, wherein the configuration information of the first TCI state comprises information used to indicate the power control adjustment state index corresponding to the first TCI state; or,
a power control adjustment state index configured for an SRS in an uplink power control parameter corresponding to the first TCI state; or,
a power control adjustment state index configured for a PUSCH or a physical uplink control channel (PUCCH) in the uplink power control parameter corresponding to the first TCI state; or,
configuration information of the first spatial relation information, wherein the configuration information of the first spatial relation information comprises information used to indicate the power control adjustment state index corresponding to the first spatial relation information; or,
information used to indicate the power control adjustment state index corresponding to the first control resource pool index; or,
information used to indicate the power control adjustment state index corresponding to the first SRI.

30. The method for determining the power control adjustment state according to claim 18, wherein the power control adjustment state index corresponding to the first information is: an SRS power control adjustment state index or a PUSCH power control adjustment state index.

31. The method for determining the power control adjustment state according to claim 18 or 30, wherein the power control adjustment state corresponding to the SRS transmission comprises: an SRS power control adjustment state corresponding to the power control adjustment state index corresponding to the first information, or a PUSCH power control adjustment state corresponding to the power control adjustment state index corresponding to the first information.

32. The method for determining the power control adjustment state according to claim 17, wherein the second information comprises first configuration information, and the first configuration information comprises one or more of the following:
information used to indicate a TCI state corresponding to the SRS transmission; or,
information used to indicate spatial relation information corresponding to the SRS transmission; or,
information used to indicate a control resource pool index corresponding to the SRS transmission;
wherein the first configuration information comprises: configuration information of an SRS resource corresponding to the SRS transmission, or configuration information of an SRS resource set corresponding to the SRS transmission.

33. A terminal, comprising a memory, a transceiver, and a processor;
wherein the memory is configured to store computer programs; the transceiver is configured to receive and send data under a control of the processor; and the processor is configured to read the computer programs in the memory and perform the following operations:
determining, based on first information, a power control adjustment state corresponding to a sounding reference signal (SRS) transmission;
wherein the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

34. A network device, comprising a memory, a transceiver, and a processor;
wherein the memory is configured to store computer programs; the transceiver is configured to receive and send data under a control of the processor; and the processor is configured to read the computer programs in the memory and perform the following operations:
sending second information to a terminal, wherein the second information is used to determine first information or a power control adjustment state index corresponding to the first information, the first information is used to determine a power control adjustment state corresponding to a sounding reference signal (SRS) transmission, and the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

35. An apparatus for determining a power control adjustment state, comprising:
a determining unit, configured to determine, based on first information, a power control adjustment state corresponding to a sounding reference signal (SRS) transmission;
wherein the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

36. An apparatus for determining a power control adjustment state, comprising:
a sending unit, configured to send second information to a terminal, wherein the second information is used to determine first information or a power control adjustment state index corresponding to the first information, the first information is used to determine a power control adjustment state corresponding to a sounding reference signal (SRS) transmission, and the first information comprises one or more of the following: related information of a first SRS resource, related information of a first SRS resource set, a first transmission configuration indicator (TCI) state, first spatial relation information, a first control resource pool index, a first SRS resource indicator (SRI), or a first physical uplink shared channel (PUSCH).

37. A non-transitory readable storage medium, storing computer programs, wherein the computer programs are used to cause a processor to execute the method according to any one of claims 1 to 16.

38. A non-transitory readable storage medium, storing computer programs, wherein the computer programs are used to cause a processor to execute the method according to any one of claims 17 to 32.
